(19) Europäisches Patentamt / European Patent Office / Office européen des brevets

(11) **EP 4 708 838 A1**

(12) **EUROPEAN PATENT APPLICATION**

(43) Date of publication:
**11.03.2026 Bulletin 2026/11**

(21) Application number: **25197273.3**

(22) Date of filing: **21.08.2025**

(51) International Patent Classification (IPC):
*H04N 1/00* (2006.01)    *H04N 1/60* (2006.01)

(52) Cooperative Patent Classification (CPC):
**H04N 1/00045; H04N 1/00005; H04N 1/00015; H04N 1/00034; H04N 1/00087; H04N 1/6033; H04N 1/6036**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **29.08.2024 JP 2024147845**

(71) Applicant: **CANON KABUSHIKI KAISHA**
**Ohta-ku**
**Tokyo 146-8501 (JP)**

(72) Inventor: **SHINYA, Takeshi**
**Tokyo (JP)**

(74) Representative: **WESER & Kollegen**
**Patentanwälte PartmbB**
**Radeckestraße 43**
**81245 München (DE)**

(54) **IMAGE INSPECTION APPARATUS, IMAGE FORMING APPARATUS, AND IMAGE INSPECTION METHOD**

(57)    An image inspection apparatus (102) comprises an image inspection means (506) that scans, via a scanning means (403), a sheet on which an image is formed conveyed from an image forming means (202) and detecting an abnormality in a formed image via comparison with a reference image. The image inspection apparatus (102) determines whether or not to execute calibration to adjust the reference image of the formed image, in a case where it is determined to execute calibration, execute calibration and store calibration data thereof in the one or more memory devices, in a case where it is determined not to execute calibration, read out calibration data from the one or more memory devices, and based on calibration data stored in the one or more memory devices or calibration data obtained by execution of the calibration, perform adjustment of the reference image or the formed image.

**F I G. 6**

**Description**

TECHNICAL FIELD

The present disclosure relates to an image inspection apparatus, an image forming apparatus, and an image inspection method for inspecting a printed material output by a printing apparatus for whether or not a printing abnormality has occurred.

BACKGROUND

With a printed material printed and output by a printing apparatus, the color material such as ink or toner may cause a blemish by adhering to an unintended portion of the sheet. In other cases, color loss may occur in which the color material of the printed material is adhered but insufficiently at a portion where an image should be formed or the color of the portion is lighter than the original color. Printing abnormalities such as blemishes and color loss cause a decrease in the quality of the printed material. Regarding this, the printed material needs to be inspected for printing abnormalities to guarantee the quality of the printed material.

Visually inspection, where an inspector visually inspects for printing abnormalities, requires a considerable amount of time and cost. Thus, an inspection system that performs inspections automatically, without relying on visually inspection, has been proposed. Specifically, whether or not there is a printing abnormality is detected by aligning a digital image (reference image) used in the printing and a scanned image obtained by scanning the printed material and executing image comparison and determination processing to determine the image quality of the printed material.

Japanese Patent Laid-Open No. 2017-187585 proposes a method for prompting for calibration of an inspection apparatus when a deviation in a color value is confirmed in an image inspection apparatus that converts a digital image used in printing into a reference image and compares the reference image and a scanned image of a printed material. According to the proposed method, the user can be notified of the need to execute calibration of the inspection apparatus at the time when a deviation in a color value has occurred.

However, in the proposed method, the user is notified of the need for calibration after a deviation in a color value has been confirmed. Thus, the user cannot be notified of the need for calibration before a deviation in a color value occurs. In some cases, depending on the characteristics of the sheet for printing, a deviation in a color value can be predicted before printing. In such a case, as the user is not notified of the need for calibration, printing is continued with the printing abnormality as is. Also, other than color value, deviations in the print position and the like are not taken into account in the execution of calibration.

SUMMARY

The present disclosure provides an inspection apparatus that enables appropriate calibration.

The present disclosure in its first aspect provides an image inspection apparatus as specified in claim 1. Optional features are specified in claim 2 to 11.

The present disclosure in its second aspect provides an image forming apparatus as specified in claim 12.

The present disclosure in its third aspect provides an image inspection method specified in claim 13.

Features of the present disclosure will become apparent from the following description of embodiments with reference to the attached drawings. The following description of embodiments is described by way of example.

BRIEF DESCRIPTION OF THE DRAWINGS

The accompanying drawings, which are incorporated in and constitute a part of the specification, illustrate embodiments of the present disclosure, and together with the description, serve to explain the principles of the embodiments.

FIG. 1 is a diagram illustrating an example of a system configuration including an inspection apparatus according to an embodiment.
FIG. 2 is a block diagram for describing the hardware configuration of an image forming apparatus according to an embodiment.
FIG. 3 is a diagram for describing the mechanism of an image forming apparatus according to an embodiment.
FIGS. 4A and 4B are schematic explanatory diagrams of the internal configuration of an inspection apparatus according to an embodiment.
FIG. 5 is a block diagram for describing the configuration of an inspection apparatus control unit of an inspection apparatus according to an embodiment.

FIG. 6 is a diagram for describing the control flow of an inspection apparatus according to an embodiment.

FIGS. 7A, 7B, and 7C are diagrams illustrating examples of UIs according to an embodiment.

FIGS. 8A and 8B are diagrams illustrating examples of calibration charts according to an embodiment.

FIG. 9 is a diagram for describing the flow of distortion information generation processing according to an embodiment.

FIG. 10 is a diagram for describing the flow of alignment processing according to an embodiment.

FIG. 11 is a schematic view illustrating the arrangement of control points of the distortion information generation processing.

FIG. 12 is a schematic view for describing updating the control points of the distortion information generation processing.

FIG. 13 is a diagram for describing the control flow of an inspection apparatus according to an embodiment.

FIG. 14 is a diagram illustrating an example of a confirmation screen according to an embodiment.

FIG. 15 is a diagram for describing the control flow of an inspection apparatus according to an embodiment.

FIG. 16 is a diagram for describing the control flow of an inspection apparatus according to an embodiment.

FIG. 17 is a diagram illustrating an example a settings screen for calibration interval of an inspection apparatus according to an embodiment.

FIG. 18 is a diagram for describing the control flow of an inspection apparatus according to an embodiment.

FIG. 19 is a diagram for describing the control flow of an inspection apparatus according to an embodiment.

FIG. 20 is a diagram illustrating an example of a UI for selection of calibration execution items according to an embodiment.

FIG. 21 is a diagram illustrating an example of a UI according to an embodiment.

FIGS. 22A and 22B together form a single diagram for describing the control flow of an inspection apparatus according to an embodiment.

DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

First Embodiment

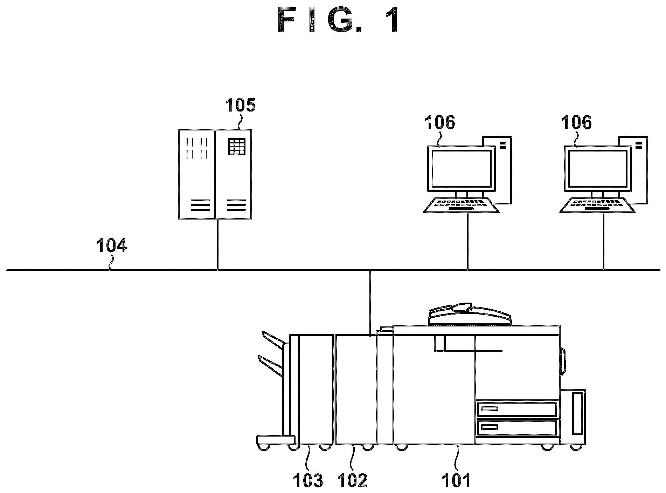

A printing system including an inspection apparatus according to the present embodiment will now be described using FIG. 1. The printing system includes an image forming apparatus 101, an inspection apparatus 102, a finisher 103, a printing server 105, and a client PC 106. The image forming apparatus 101, the printing server 105, and the client PC 106 are connected in a communication-enabling manner by a network 104. The configuration of the printing system is not limited to that illustrated in FIG. 1, and any type of network configuration, such as LAN, the Internet, and an intranet, may be used for connection.

The image forming apparatus 101 processes various types of input data and performs print output. The inspection apparatus 102 receives a printed material printed and discharged by the image forming apparatus 101 and inspects the contents of the printed material. The finisher 103 receives an output sheet (printed material) inspected by the inspection apparatus 102 and executes post-processing such as binding.

The image forming apparatus 101 is connected with the external printing server 105 and the client PC 106 via the network 104. Also, the inspection apparatus 102 has a 1-to-1 connection with the image forming apparatus 101 via a communication cable. The finisher 103 also has a 1-to-1 connection with the image forming apparatus 101 via a different communication cable. Also, the inspection apparatus 102 and the finisher 103 are connected to one another via different communication cable.

In this manner, the image forming apparatus 101, the inspection apparatus 102, and the finisher 103 can communicate with one another. In the first embodiment, the inspection system described in an in-line inspection system that seamlessly performs image formation, image inspection, and finishing. In the embodiment illustrated in FIG. 1 described herein, the image forming apparatus 101 and the inspection apparatus 102 are an in-line inspection system. However, no such limitation on the present embodiment is intended, and these may be integrally formed as one apparatus. For example, the inspection apparatus 102 may be integrally formed with the image forming apparatus 101 and be an apparatus forming the image forming apparatus 101. Also, for example, the inspection apparatus 102 may be included in the image forming apparatus 101 as an inspection unit, may be an apparatus separate from the image forming apparatus 101, or may be an apparatus integrally formed with the image forming apparatus 101.

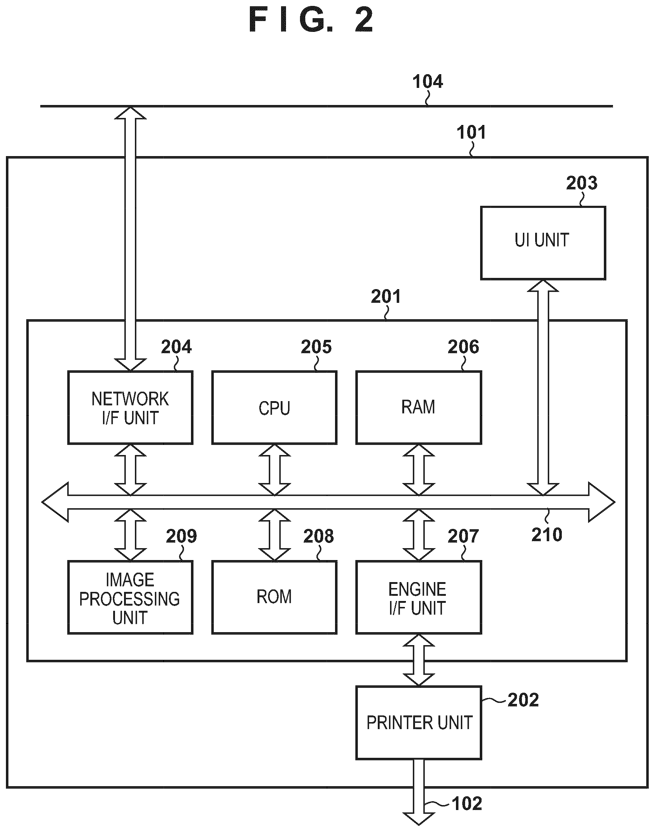

The hardware configuration of the image forming apparatus 101 according to the present embodiment will now be described with reference to FIG. 2. The image forming apparatus 101 is an example of an image forming apparatus of the present embodiment and includes a controller 201, a printer unit 202, and a user interface (UI) unit (operation unit) 203.

The client PC 106 or the printing server 105 on the network 104 generates PDL data from image data or document data via a software application (not illustrated) such as a printer driver. Then, the client PC 106 or the printing server 105 transmits the PDL data to the image forming apparatus 101 via the network 104 (for example, a local area network). In the image forming apparatus 101, the controller 201 receives the transmitted PDL data. When the controller 201, connected to the printer unit 202, receives the PDL data from the client PC 106 or the printing server 105, the PDL data is converted to print data processable by the printer unit 202, and the print data is then output to the printer unit 202.

The printer unit 202 performs printing of the image on the basis of the print data output by the controller 201. Note that the printer unit 202 according to the present embodiment is an electro-photographic printer engine. The printing method is not limited to this, and any method such as an inkjet method, for example, may be used.

The UI unit 203 is operated by the user and is used for the user to select various functions and perform operation instructions. The UI unit 203 includes a display unit with a touch panel provided in the surface, a start key and a stop key, a keyboard provided with various types of keys such as a tenkey, and/or the like.

Next, the controller 201 will be described in detail. The controller 201 includes a network interface (I/F) unit 204, a CPU 205, a RAM 206, a ROM 208, an image processing unit 209, an engine interface (I/F) unit 207, and an internal bus 210. Each unit of the controller 201 is connected via the internal bus 210. The network I/F unit 204 is an interface for receiving PDL data transmitted from the client PC 106 or the printing server 105. The CPU 205 performs control of the entire image forming apparatus 101 using programs and data stored in the ROM 208 and executes the processing described below executed by the controller 201.

The RAM 206 provides a working area used when the CPU 205 executes various types of processing. The ROM 208 stores programs and data for causing the CPU 205 to execute the various types of processing described below, settings data of the controller 201, and the like.

The image processing unit 209, in response to settings from the CPU 205, executes image processing for printing on the PDL data received by the network I/F unit 204 and generates print data processable by the printer unit 202. In particular, the image processing unit 209 performs rasterizing on the received PDL data to generate image data (RIP data) with a plurality of color components per pixel.

Here, the plurality of color components are independent color components in a color space such as RGB (red, green, blue). The image data has an 8-bit (256 tones) value, for example, for one color component per pixel. In other words, the image data is multivalue bitmap data including multivalue pixel data. Also, in the rasterizing, as well as the image data, attribute data indicating, per pixel, the attributes of the pixels of the image data is also generated. The attribute data indicates which pixel belongs to which type of object and is a value indicating the type of object such as text, line, graphic, image, and background. The image processing unit 209 uses the generated image data and attribute data to perform conversion from the RGB color space to the CMYK (cyan, magenta, yellow, black) color space and execute screening processing and similar image processing to generate print data.

The engine I/F unit 207 is an interface for transmitting the print data generated by the image processing unit 209 to the printer unit 202. The internal bus 210 is a system bus that connects the units described above and transmits control signals and the like.

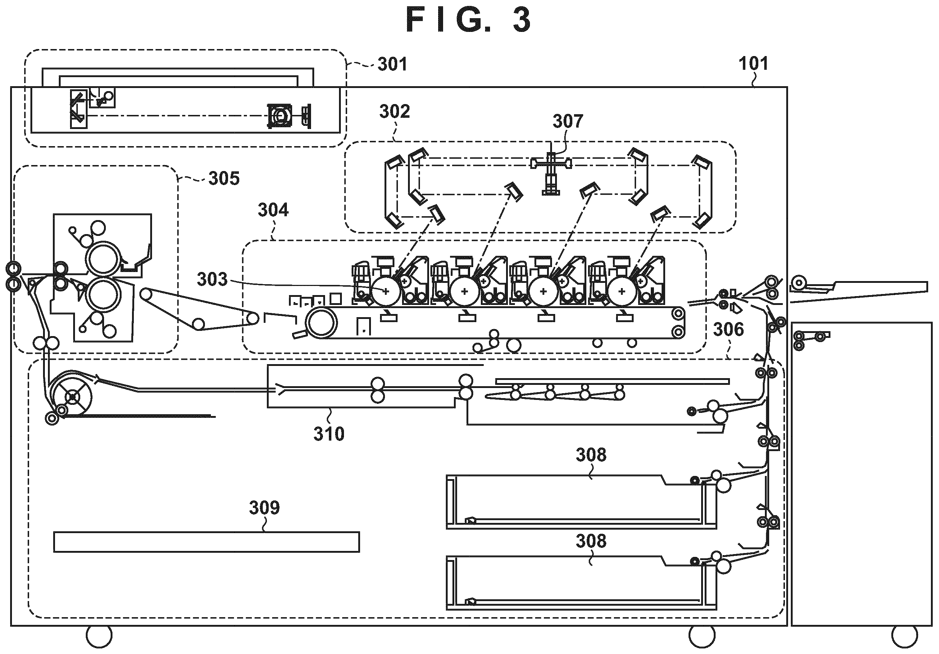

The mechanism of the image forming apparatus 101 according to the present embodiment will now be described with reference to FIG. 3.

The image forming apparatus 101 includes a scanner unit 301, a laser exposure unit 302, a photosensitive drum 303, an image forming unit 304, a fixing unit 305, a feeding/conveying unit 306, sheet storage 308, and a printer control unit 309 that controls these. The scanner unit 301 illuminates a document placed on the platen, optical scans the document image, and converts the image into an electrical signal to generate image data. The laser exposure unit 302 makes a light beam such as laser light modulated according to the image data be incident on a rotating polygon mirror (polygon mirror) 307 rotating at a uniform angular velocity and exposes the photosensitive drum 303 to this as a reflected scanning beam. The image forming unit 304 includes four developing units for the CMYK (cyan, magenta, yellow, black) colors. Each developing unit rotationally drives the photosensitive drum 303, charges the photosensitive drum 303 via a charging device, and develops a latent image formed on the photosensitive drum 303 by the laser exposure unit 302 using toner. Then, the toner image is transferred to the sheet and an image is formed. The small amount of toner remaining on the photosensitive drum 303 that did not get transferred is collected. In this manner, the image forming unit 304 achieves image formation by including the four developing units (development stations) of a sequence of electrophotographic processes.

The four developing units, cyan (C), magenta (M), yellow (Y), and black (K) are arranged in order in the image forming unit 304. In the image forming unit 304, the magenta, yellow, and black image forming operation is executed sequentially after a predetermined amount of time has passed from the start of the cyan station image forming.

The fixing unit 305 includes a roller, a belt, and the like and further includes a builtin heat source such as a halogen heater. The fixing unit 305, via heat and pressure, melts and fixes the toner on the sheet which the image forming unit 304 has transferred the toner image to. Note that, when printing on a thick sheet, due to the thickness of the sheet, the thermal conductivity is poor. Thus, it is necessary to set the speed at which the sheet passes through the fixing unit 305 to half of the normal speed, for example. Due to this, when printing on a thick sheet, the sheet conveyance speed of each unit other than the fixing unit 305 is also reduced to half. Thus, the printing speed of the image forming apparatus 101 is reduced to half.

The feeding/conveying unit 306 includes one or more of the sheet storages 308 represented by a sheet cassette or paper deck. The feeding/conveying unit 306, in response to an instruction from the printer control unit 309, separates one sheet from the plurality of sheets stored in the sheet storage 308 and conveys the sheet to the image forming unit 304. A toner image of each color is transferred onto the sheet conveyed in this manner by the development stations described above, and ultimately, a full color toner image is formed on the sheet. Also, in the case of forming an image on both sides of a sheet, control is performed so that a sheet that has passed the fixing unit 305 travels along a double-sided conveyance path 310 to again be conveyed to the image forming unit 304.

The printer control unit 309 communicates with the controller 201 that controls the entire image forming apparatus 101 to execute control in response to the instructions. Also, the printer control unit 309 issues instructions so that operations are smooth and the overall flow is maintained while managing the state of each scanner, laser exposure, image forming, fixing, and feeding/conveying unit described above.

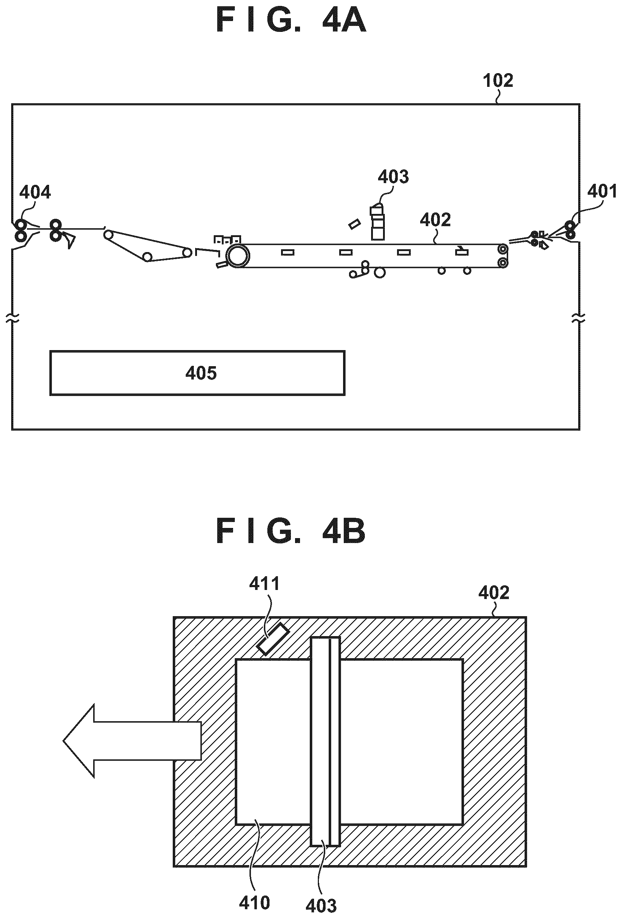

The internal configuration of the inspection apparatus 102 according to the present embodiment will now be described with reference to FIGS. 4A and 4B. As illustrated in FIG. 4A, the sheet (printed material) output from the image forming apparatus 101 is taken into the inspection apparatus 102 by a feeding roller 401. Thereafter, the printed material is scanned by an imaging unit 403 above a conveyor belt 402 while being conveyed by the conveyor belt 402. The imaging unit 403 functions as a scanning unit.

The imaging unit 403 is provided with an image capture function via an installed contact image sensor (CIS), for example, and captures an image of the sheet passing through the inspection apparatus 102. The captured image is then transmitted to the inspection apparatus 102 via an inspection apparatus control unit 405. The CIS is an image sensor with an integrally formed sensor (light-receiving element), light source (LED), and rod lens array (equal magnification focusing lens) and can scan an image printed on a sheet in a more compact manner and closer to the surface of the sheet compared to a camera. Note that the CIS of the imaging unit 403 is an example of a sensor, and a CCD image sensor or another type of sensor may be used. The image capture method is not limited.

Using the image data (scanned image) obtained by the imaging unit 403 scanning the printed material, the inspection apparatus control unit 405 executes inspection processing. Also, the inspection apparatus control unit 405 performs control of the entire inspection apparatus 102. The inspected printed material is sent to the finisher 103. The post-inspection printed material is discharged by a discharge roller 404. Though not illustrated here, the imaging unit 403 may support double-sided printed material and may have a structure in which the double-sided printed material is scanned with the imaging unit 403 on the lower side of the conveyor belt 402 as well.

FIG. 4B is a top view of the conveyor belt 402 as seen from the imaging unit 403. The CIS of the imaging unit 403, when scanning a printed material 410, irradiates the printed material 410 via light source and scans via the sensor. A skew detection irradiation device 411 is an apparatus for detecting whether or not the printed material 410 is skewed with respect to the conveyance direction when the printed material 410 is conveyed on the conveyor belt 402. The skew detection irradiation device 411 irradiates the conveyed printed material 410 with light from a diagonal direction, the imaging unit 403 scans an image of the shadow of the end portion of the printed material 410, and the skew detection irradiation device 411 detects for a skew in the printed material 410. In the present embodiment, the imaging unit 403 performs the scanning of the shadow image of the end portion of the printed material 410, but in another configuration, a scanning sensor other than the imaging unit 403 may be used.

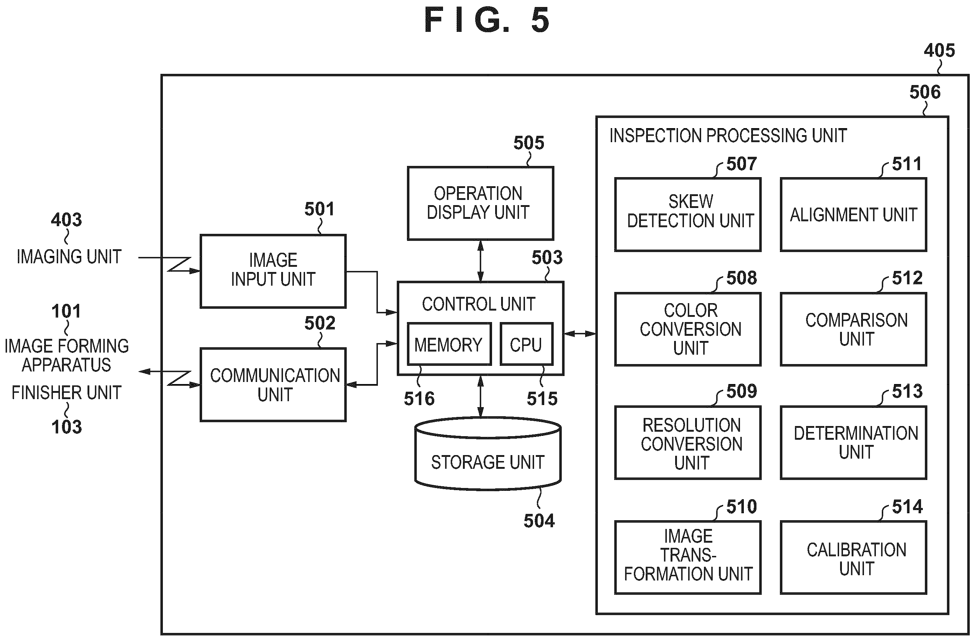

The configuration of the inspection apparatus control unit 405 of the inspection apparatus 102 according to the present embodiment will now be described with reference to FIG. 5. The inspection apparatus control unit 405 includes an image input unit 501, a communication unit 502, a control unit 503, a storage unit 504, an operation display unit 505, and an inspection processing unit 506. The inspection apparatus control unit 405 is controlled by the control unit 503. The control unit 503 includes a CPU 515 and a memory 516. The CPU 515 implements the various types of processing described below by loading programs stored in the storage unit 504 into the memory 516 of the control unit 503 and executing the programs.

The image input unit 501 receives the scanned image obtained by the printed material being scanned by the imaging unit 403. The CPU 515 stores the received scanned image in the storage unit 504. The communication unit 502 communicates with the controller 201 of the image forming apparatus 101. The communication includes the receiving of image data (reference image) used in printing, corresponding to the scanned image, and the exchange of inspection control information. The CPU 515 stores the received reference image and the inspection control information in the storage unit 504.

The operation display unit 505 functions as a display unit and is a display screen that can display various types of menus, print data information, and the like. The operation display unit 505 also functions as a reception unit for receiving operations from the user. The operation display unit 505 also functions as a display control unit.

The inspection control information is exchanged between the inspection apparatus 102 and the image forming apparatus 101. One example of inspection control information is synchronization information for obtaining the correspondence between the scanned image (inspection image) of the printed material and the reference image of the print data, such as print job information, number of copies to print information, page order information, and the like. Another example is inspection result information and control information for controlling the operation of the image forming apparatus 101 according to the inspection result information. In the case of double-sided printing or printing a plurality of sets, in the inspection apparatus 102, the order of the scanned image for scanning and the reference image used to print the scanned image may be different. The synchronization information is necessary for synchronizing the reference image and the scanned image in a case where the order of the scanned image and the reference image is different. Also, the synchronization information is necessary for synchronizing the reference image and the scanned image in a case where one reference image corresponds to a plurality of scanned images. The inspection control information exchanged between the inspection apparatus 102 and the finisher 103 is inspection result information and control information for controlling the operation of the finisher 103 according to the inspection result information.

The operations of the inspection processing unit 506 are controlled by the CPU 515 of the control unit 503. The inspection processing unit 506 sequentially executes inspection processing on a pair of a corresponding scanned image and reference image on the basis of the synchronization information, which is one piece of inspection control information exchanged with the image forming apparatus 101 as described above. The inspection processing unit 506 will be described below in detail. When the inspection processing ends, the determination result is sent to the control unit 503 and displayed on the operation display unit 505. In a case where the determination result shows an image abnormality, using a method predesignated by the user via the operation display unit 505, control of the image forming apparatus 101 and the finisher 103 switches via the communication unit 502. For example, the image forming processing by the image forming apparatus 101 is stopped and the discharge tray of the finisher 103 switches to an escape tray or similar processing is executed.

Next, the functional configuration of the inspection processing unit 506 will be described. The inspection processing unit 506 includes a skew detection unit 507, a color conversion unit 508, a resolution conversion unit 509, an image transformation unit 510, an alignment unit 511, a comparison unit 512, a determination unit 513, and a calibration unit 514. The component elements of the inspection processing unit 506 may be implemented by the CPU 515 loading programs stored in the storage unit 504 into the memory 516 of the control unit 503 and executing the programs. One or more of all of the component elements of the inspection processing unit 506 may be implemented via dedicated processing circuitry such as ASIC.

The skew detection unit 507 is a module for detecting the skew angle of the scanned image. As described above with reference to FIG. 4B, the imaging unit 403 scans the shadow of the end portion of the printed material formed by the skew detection irradiation device 411 emitting light at the printed material taken into the inspection apparatus 102 and conveyed on the conveyor belt 402. The skew detection unit 507 detects the skew angle of the printed material using the shadow of the end portion of the scanned image. Correction processing is executed in the image transformation unit 510 on the basis of the skew angle detected in this manner.

The color conversion unit 508 is a module for performing color conversion between the scanned image and the reference image. The reference image is rasterized in the CMYK color space by the image processing unit 209, and the scanned image is rendered in the RGB color space scanned by the imaging unit 403. The color conversion unit 508 converts the reference image to an RGB image. For example, the conversion may use the CMYK to RGB look-up table (LUT) illustrated in Table 1.

Table 1. CMYK to RGB LUT

| C | M | Y | K | R | G | B |
|---|---|---|---|---|---|---|
| 0 | 0 | 0 | 0 | 220 | 220 | 220 |
| 31 | 0 | 0 | 0 | 200 | 215 | 220 |
| 63 | 0 | 0 | 0 | 170 | 210 | 220 |
| ... | ... | ... | ... | ... | ... | ... |
| 255 | 255 | 255 | 255 | 3 | 3 | 3 |

The color conversion unit 508, in the case of using the LUT, performs color conversion to RGB referencing the color conversion table on the pixels on the grid points, and for the pixels not on the grid points of the LUT, RGB is obtained via interpolation from the adjacent grid points.

Also, the LUT described above is held for each type or sheet and characteristic. This is because the RGB values of the scanned image change greatly depending on the type of the sheet and the characteristics. The sheet type information is stored together with the LUT in the storage unit 504, and when referencing the LUT, the color conversion unit 508 determines the reference destination of the LUT from the corresponding ID on the basis of the sheet type information.

The resolution conversion unit 509 is a module for performing conversion of the resolution of the scanned image and the reference image. The scanned image and the reference image may have different resolutions at the point in time when they are input into the inspection apparatus control unit 405. Also, the resolution of the image used in each module of the inspection processing unit 506 may be different from the resolution of the input image. In such cases, the resolution conversion unit 509 performs image resolution conversion. Take an example where the scanned image is 600 dpi main scan and 300 dpi sub-scan, and the reference image is 1200 dpi main scan and 1200 dpi sub-scan. In a case where the resolution required by the inspection processing unit 506 is 300 dpi for both the main scan and the sub-scan, the scanned image and the reference image are both scaled down to images of 300 dpi for both the main scan and the sub-scan. The scaling method used here may be any known method taking into consideration the calculation load and required accuracy. For example, in the case of scaling using a SINC function, the calculation load is high, but a scaling result with high accuracy can be obtained. In the case of scaling using the nearest neighbor method, the calculation load is low, but a scaling result with low accuracy is obtained.

The image transformation unit 510 generates distortion information on the basis of the image obtained by the calibration unit 514 described below. The generation method will be described below.

The alignment unit 511 executes alignment processing of the scanned image and the reference image. The alignment processing will be described below in detail.

The comparison unit 512 is a module for comparing the scanned image and the reference image. The scanned image and the reference image input into the comparison unit 512 are images with the same resolution. Also, the scanned image and the reference image being able to be compared is premised on the scanned image being corrected at the alignment unit 511. The comparison unit 512 executes comparison processing of the reference image and the scanned image which have been matched in terms of resolution at the resolution conversion unit 509 and aligned at the alignment unit 511.

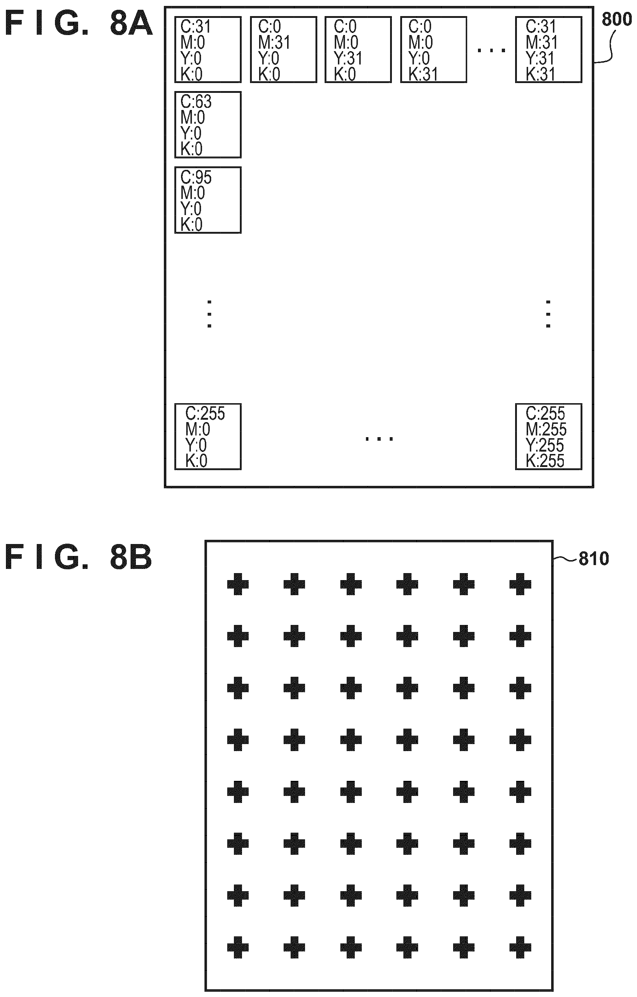

The calibration unit 514 performs adjustment of the LUT and the distortion parameter. The calibration unit 514 performs adjustment of the LUT and the distortion parameter by scanning the calibration chart. Calibration charts include a color chart such as a calibration chart 800 of FIG. 8A and a chart with a cross mark pattern such as a calibration chart 810 of FIG. 8B. The color chart of the calibration chart 800 of FIG. 8A is used to correct color values. Whereas a calibration chart with cross marks such as that of the calibration chart 810 of FIG. 8B, dot patterns, lines and spaces, or the like arranged in a grid pattern is used to correct sheet misalignment and printing distortion.

The calibration unit 514 first reads the calibration chart 800, such as that illustrated in FIG. 8A, to adjust the LUT used in the color conversion unit 508. Patches aligned with the grid points of the LUT should be printed on the calibration chart 800. The CMYK values aligned with the grid points are read by the imaging unit 403 to obtain RGB values. The LUT is adjust on the basis of the correspondence between the CMYK values of the calibration chart and the read RGB values.

Next, the calibration unit 514 reads the calibration chart 810, such as that illustrated in FIG. 8B, to adjust the distortion parameter used in the alignment unit 511. The calibration chart 810 can obtain more accurate information with smaller intervals between marks. Also, here, a cross is used as the shape of the mark, but the shape is not limited thereto and may be a square or the like, for example. The method for adjusting the LUT and the distortion parameter will be described below in detail.

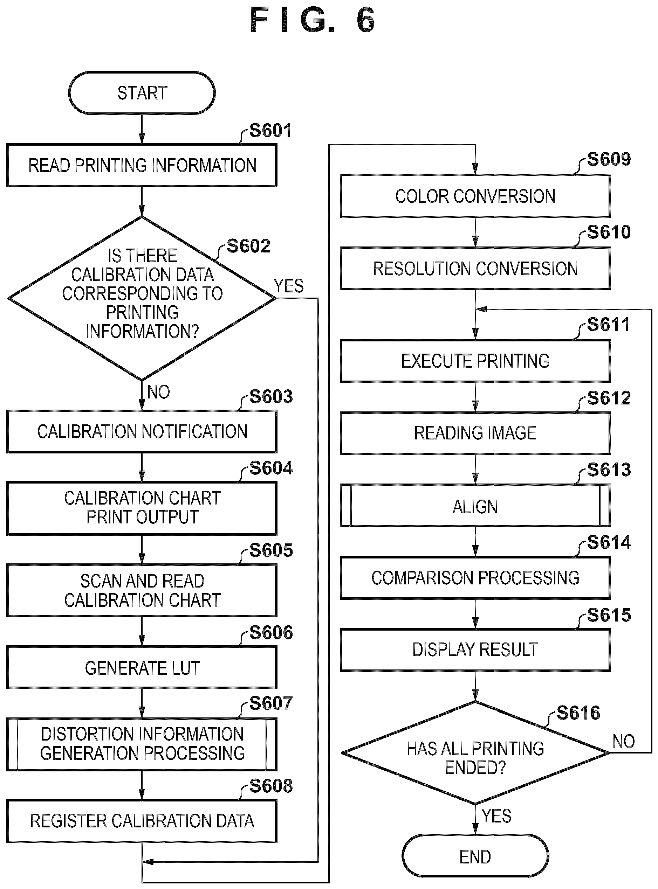

The processing flow for the inspection apparatus 102 to execute inspection will now be described with reference to FIG. 6. The processing described below is processing executed by the inspection processing unit 506. For example, the processing is implemented by the CPU 515 of the control unit 503 of the inspection apparatus 102 reading out a program stored in the storage unit 504 onto the memory 516 and executing the program. Hereinafter, the step number of each process included in the flowchart will be indicated by a number preceded by "S". This is the same for subsequent flowcharts also.

A print job is input from the client PC 106 or the printing server 105 to the image forming apparatus 101. The flow of FIG. 6 starts when the print job is input to the image forming apparatus 101.

First, in S601, the CPU 515 receives the RIP data and the sheet type according to the print job from the image processing unit 209 of the image forming apparatus 101 via the communication unit 502. The RIP data is the reference image used in print output.

Next, in S602, the CPU 515 determines whether there is calibration data corresponding to the sheet type received from the image forming apparatus 101. The calibration data is a set including the sheet information, the LUT used by the color conversion unit 508, and the distortion information used by the image transformation unit 510. The calibration data is stored in the storage unit 504 as a calibration data list, and the CPU 515 executes processing to read out that which matches the sheet type received from the image forming apparatus 101. Table 2 is an example of a calibration data list.

Table 2. Calibration data list

| ID | Sheet type |
|---|---|
| 001 | Regular paper |
| 002 | Thin paper |

Examples in which the sheet type received from the image forming apparatus 101 is "regular paper" and "coated paper" will be described below. First, in a case where the sheet type received from the image forming apparatus 101 is regular paper, regular paper is in the calibration data list as a sheet type, corresponding to ID001. The CPU 515 executes processing to read out the LUT and the distortion information of ID001 from the storage unit 504. On the other hand, in a case where the sheet type received from the image forming apparatus 101 is coated paper, no sheet type in the calibration data list matches. Thus, it is determined that calibration of the inspection apparatus 102 needs to be executed.

In S602, in a case where the CPU 515 determines that the received sheet type matches one of the sheet types in the calibration data list (in the case of YES), the CPU 515 advances the processing to S608. On the other hand, in S602, in a case where the CPU 515 determines that no sheet types in the calibration data list match the received sheet type (in the case of NO), since calibration of the inspection apparatus 102 needs to be executed, the CPU 515 advances the processing to S603.

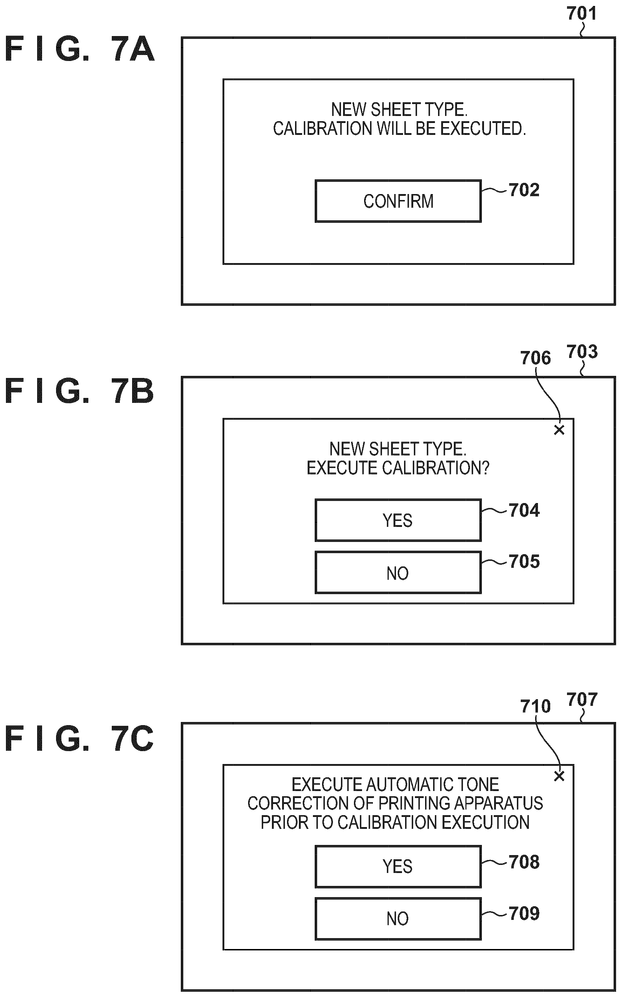

Next, in S603, the CPU 515 displays a UI screen 701 illustrated in FIG. 7A for notifying the user that calibration of the inspection apparatus 102 will be executed via the operation display unit 505. The UI screen 701 is a notification screen for displaying a message that calibration of the inspection apparatus 102 will be executed. It is also a confirmation screen for obtaining confirmation from the user. For example, the operation display unit 505 displays a message saying "New sheet type. Calibration will be executed". Then, when the user operates a confirmation button 702, the CPU 515 advances the processing to S604.

Next, in S604, the CPU 515 executes print output processing of a calibration chart. As the calibration chart, the color calibration chart 800 of FIG. 8A and the cross-pattern calibration chart 810 of FIG. 8B as described above are used.

The calibration chart is RIP data and is stored in advance in the storage unit 504. Note that the method for obtaining the calibration chart is not limited thereto. It is sufficient that a certain chart can be obtained, and PDL data for a calibration chart may be input from the controller 201 of the image forming apparatus 101. Also, PDL data for a calibration chart may be input from an external apparatus such as the client PC 106. The CPU 515 transmits the calibration chart read out from the storage unit 504 to the image forming apparatus 101 via the communication unit 502. In the image forming apparatus 101, the printer unit 202 performs print output of the calibration chart.

Next, in S605, the CPU 515 executes processing to scan and read the printed image of the calibration chart output via printing by the image forming apparatus 101 and conveyed in the inspection apparatus 102. The image input unit 501 uses the imaging unit 403 to read the printed image of the calibration chart. First, the printed image of the calibration chart 800 is read. Next, the printed image of the calibration chart 810 is read. Then, the calibration unit 514 executes calibration on the basis of the RIP data of the calibration chart and the scanned image of the printed image of the calibration chart.

Next, in S606, the calibration unit 514 generates a LUT on the basis of the calibration chart 800. The calibration unit 514 generates the LUT by associating together the patches corresponding to the CMYK grid points of the calibration chart 800 and the RGB values obtained by scanning and reading the printed image of the calibration chart 800.

Next, in S607, the calibration unit 514 generates the distortion information from the mark information of the calibration chart 810 scanned and read in S605. The distortion information generation processing will be described below in detail.

Next, in S608, the CPU 515 executes registration processing of the calibration data. The sheet type newly calibrated is added to the calibration data list of Table 2, and the calibration data list is updated. An example of the calibration data list with coated paper added is illustrated in Table 3.

Table 3. Calibration list

| ID | Sheet type |
|---|---|
| 001 | Regular paper |
| 002 | Thin paper |
| 003 | Coated paper |

Then, the CPU 515 stores the LUT and the distortion information corresponding to the added ID003 in the storage unit 504 and ends the calibration data registration.

S609 to S616 correspond to execution of printing of the print data after the end of calibration and printed material inspection processing. In S609, the color conversion unit 508 performs color conversion of the reference image, which is what the print data is based on. To bring the reference image closer to the scanned image, the color conversion unit 508 uses a LUT corresponding to a sheet type registered in the calibration data list. The LUT is the LUT referenced in S602 and newly updated in S608.

Next, in S610, the resolution conversion unit 509 performs resolution conversion of the reference image. At this time, first, the CPU 515 uses the resolution conversion unit 509 to convert the reference image into a predetermined resolution (for example, 300 dpi $\times$ 300 dpi).

Next, in S611, the CPU 515 put the inspection apparatus 102 is a state in which a print job can be received and sends an execute print command to the controller 201 of the image forming apparatus 101. When the controller 201 receives the command, in S611, printing based on the RIP data of the print job and the sheet information is started.

Next, in S612, the CPU 515 executes processing to obtain a scanned image by the imaging unit 403 scanning a printed material output via printing from the image forming apparatus 101.

Next, in S613, the alignment unit 511 performs alignment of the scanned image and the reference image. The alignment will be described below.

Then, in S614, the comparison unit 512 performs a comparison of the scanned image and the reference image. First, the comparison unit 512 compares the scanned image and the reference image. Then, the determination unit 513 determines whether or not the scanned image output via printing has an image abnormality. The reference value for determining whether or not there is an image abnormality is based on a setting value stored in advance in the storage unit 504.

Next, the processing proceeds to S615, and the CPU 515 performs control to display the result of the inspection processing of S614 on the operation display unit 505. At this time, if just the final determination result is simply displayed, it may be hard for the user to comprehend what kind of image abnormality there is. Thus, the final determination result is combined with the scanned image and displayed on the operation display unit 505. The combining here may use any combining method that can make the image abnormality section easy to comprehend. For example, as the final determination result, the image abnormality section may be displayed in the scanned image in red.

Then, in S616, the CPU 515 performs control to repeatedly execute the processing from S611 to S615 until all of the printing is complete.

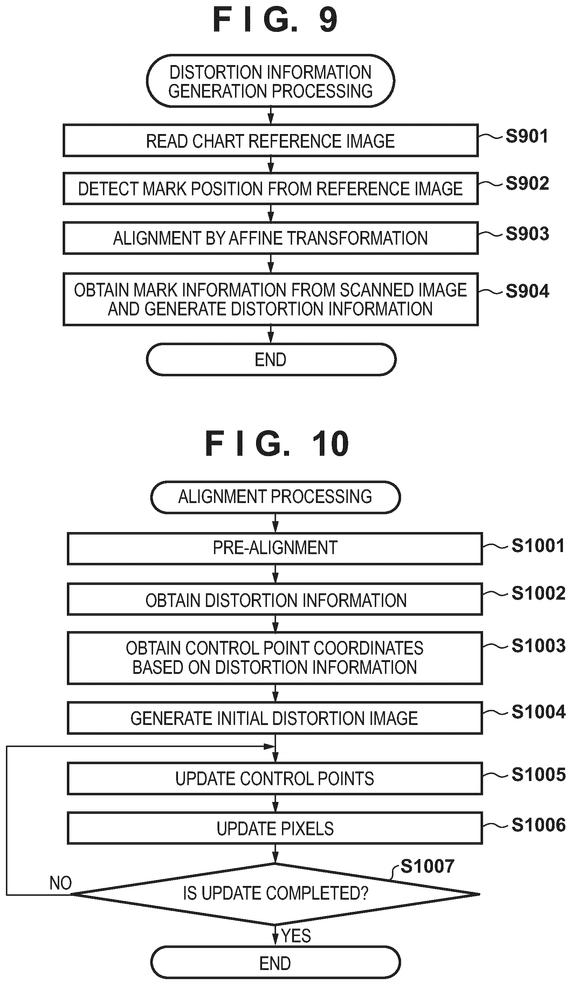

Next, the distortion information generation processing of S607 will be described with reference to FIG. 9. The processing illustrated in the flowchart is processing executed by the inspection processing unit 506. For example, the processing is implemented by the CPU 515 of the control unit 503 of the inspection apparatus 102 reading out a program stored in the storage unit 504 onto the memory 516 and executing the program.

First, in S901, the CPU 515 performs control of the processing to obtain the reference image. The reference image is RIP data used in S604 and used to output via printing the calibration chart 810.

Next, in S902, the CPU 515 performs control of the processing to detect the mark position from the reference image. The method for detecting a mark position is not particularly limited, and an example of a method includes extracting a pixel region of a mark via template matching, obtaining the centroid of the pixel region, and setting the mark position. At this time, so that each mark can be identified, an index, with the marks being j row i column from the upper left of the sheet, is simultaneously obtained on the basis of the mark positions. Note that the mark positions may be stored in advance in the storage unit 504. In a case where the mark positions in the reference image can be predicted, these may be used without performing detection.

Next, in S903, the alignment unit 511 performs alignment of the scanned image of the calibration chart 810 obtained in S605 to match the reference image via affine transformation. The alignment method may be, for example, an alignment method in which an affine matrix such as one with the minimum sum of Euclidean distance of the mark positions is obtained and affine transformation is performed. An affine transformation is a transformation such rotation, translation, scale up/down, and shear of the image overall. When an affine transformation is used, the scanned image can be aligned with the reference image while keeping localized distortion in the image. In the case of double-sided printing, the alignment unit 511 aligns the front surface and the back surface.

Next, in S904, the calibration unit 514 obtains the mark position detection and mark index from the scanned image aligned in S903 via a similar method to that used in S902 and generates distortion information. In the case of double-sided printing, processing is executed on both the front surface and the back surface. Thus ends the distortion information generation processing.

Next, the alignment processing of S613 will be described with reference to FIG. 10. The processing illustrated in the flowchart is processing executed by the alignment unit 511 and the image transformation unit 510 of the inspection processing unit 506. For example, the processing is implemented by the CPU 515 of the control unit 503 of the inspection apparatus 102 reading out a program stored in the storage unit 504 onto the memory 516 and executing the program.

Free-form deformation (FFD) is used in the example described here as the image transformation method according to the present embodiment, but the method is not limited thereto. It is desirably that thin plate spline (TPS), the landmark LDDMM method, or similar image transformation method suitable for the shape are used. The image on which the print data is based on is referred to as a reference image T. Also, the inspection-target image obtained by a reference image being printed and an inspection target, printed material, being scanned is referred to as a scanned image I. An image obtained by distortion correction processing being executed on the scanned image I is referred to as a distortion corrected image I' . Note that T(x, y), I(x, y), I'(x, y) represent pixel values at coordinates (x, y).

First, in S1001, the alignment unit 511 performs pre-alignment. For example, in the alignment method, feature points are extracted from an image, an affine matrix such as one with the minimum sum of Euclidean distance of the feature points is obtained, and affine transformation is performed.

Next, in S1002, the CPU 515 controls the processing to obtain the distortion information of the calibration data read in S602 or the distortion information generated in S608.

Next, in S1003, the image transformation unit 510 arranges control points in the scanned image and the reference image on the basis of the distortion information. A grid of L × M control points on a certain scanned image I is arranged. The number of control points is preferably more than the number of marks of the calibration chart 810 so that distortion correction accuracy is increased. Also, the coordinates of the l-th row m-th column control point correspond to $p_{l,m}(l = 1, ..., L, m = 1, ..., M)$ .

Here, the transformation formula for generating the distortion corrected image I' from the scanned image I is expressed by the following Formula (1). w(x,y) is represented by the following Formula (2) and is a formula for obtaining the post-distortion-correction coordinates of the coordinates (x,y) in the scanned image I. The bases $B_0(t)$, $B_1(t)$, $B_2(t)$, and $B_3(t)$ in the following Formula (2) are represented by the following Formula (3) to Formula (6). Also, u,v is represented by the following Formula (7) and Formula (8). Also, $\delta_x$ and $\delta_y$ are represented by the following Formula (9) and Formula (10). Here, H, W corresponds to the vertical size and horizontal size of each image.

$$I'(x,y) = I(w(x,y)) \qquad ... \quad (1)$$

$$w(x,y) = \sum_{i=0}^{3}\sum_{j=0}^{3} B_i(u)B_j(v)p_{u+i,v+j} \qquad ... \quad (2)$$

$$B_0(t) = (1-t)^3/6 \qquad ... \quad (3)$$

$$B_1(t) = (3t^3 - 6t^2 + 4)/6 \quad ... \quad (4)$$

$$B_2(t) = (-3t^3 + 3t^2 + 3t + 1)/6 \qquad ... \quad (5)$$

$$B_3(t) = t^3/6 \qquad ... \quad (6)$$

$$u = \left\lfloor \frac{x}{\delta_x} \right\rfloor - 1 \qquad ... \quad (7)$$

$$v = \left\lfloor \frac{y}{\delta_y} \right\rfloor - 1 \qquad ... \quad (8)$$

$$\delta_x(t) = \frac{W}{M-1} \qquad ... \quad (9)$$

$$\delta_y(t) = \frac{H}{L-1} \qquad ... \quad (10)$$

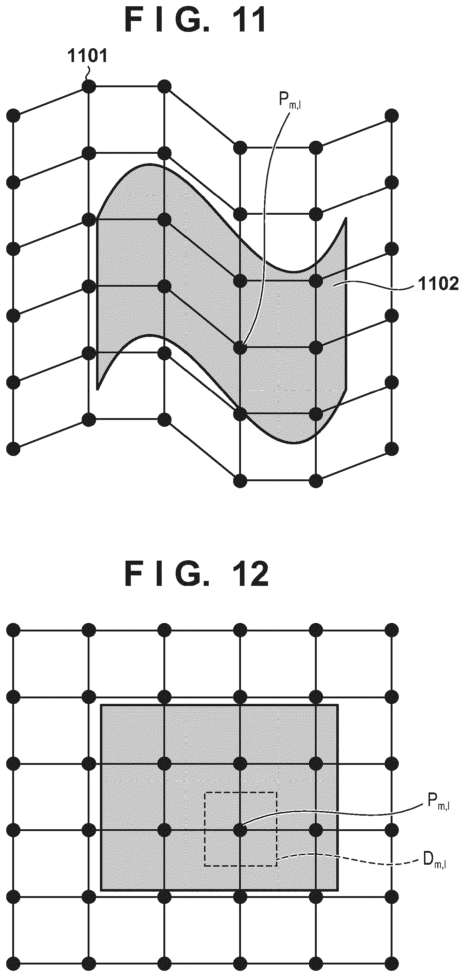

The arrangement of the control points will now be described with reference to FIG. 11. FIG. 11 is a schematic view representing control points 1101 arranged at the optimal coordinates according to the distortion of an image 1102. In S1003, the control point optimal coordinates $p_{l,m}(l = 1, ... , L, m = 1, ... , M)$ are obtained using the distortion information. As the obtaining method, for example, the method of least squares can be used to analytically obtain the control point coordinates. In other words, the correspondence of mark positions of the scanned image of the calibration chart 810 and the reference image is captured as the correspondence of feature points of the scanned image and the reference image. When transformation via Formula (1) is performed on the scanned image of the calibration chart 810, control point coordinates to make the offset of the mark positions of the reference image the minimum is obtained. The sum of squared errors of the mark positions is represented by the following Formula (11). In the following Formula (11), the row number and column number of the marks of the calibration chart 810 are defined as $L_\mu$ and $M_\mu$, respectively. Also, in the following Formula (11), the mark positions at the index j-th row and i-th column of the reference image of the calibration chart 810 and the scanned image are defined as $\mu_t^{(i,j)}$ and $\mu_s^{(i,j)}$. Formula (11) is differentiated with respect to vectors using all of the control point coordinates as elements. Then, when the differential value is set to 0, the vectors using all of the control point coordinates as elements can be obtained as the control point coordinates to be obtained.

$$ E = \left(1/(L_\mu \times M_\mu)\right) \times \sum_{j=1}^{L_\mu} \sum_{i=1}^{M_\mu} \left\| \mu_t^{(i,j)} - w(\mu_s^{(i,j)}) \right\|^2 \qquad \ldots \quad (11) $$

In the present embodiment, the grid points used for deriving the distortion corrected image I' are 16 points, *p(u, v)* *p(u* + 1, *v*),...*p(u* + 3, *v* + 3). But no such limitation is intended. For example, four grid points close in the (x,y) Euclidean distance may be used.

Next, in S1004, on the basis of the control point coordinates obtained in S1003, the image transformation unit 510 performs transformation of the scanned image I using Formula (1) and generates the distortion corrected image I'. The distortion corrected image I' is held as an initial distortion image.

Next, after S1005, small amounts of distortion not corrected in S1004 are corrected. Small amounts of distortion refers to distortion that does not appear at the time of the calibration of the inspection apparatus 102, such as distortion that does not appear at the timing of printing and scanning. In the present embodiment, a method will be described for optimizing the control points used in the free-form deformation on the basis of a comparison between the scanned image and the initial distortion image. Hereinafter, the scanned image will be referred to as T, the initial distortion corrected image will be referred to as I', and the image obtained by distortion correction processing after update will be referred to as alignment image I". Note that T(x, y), I' (x, y), I" (x, y) represents the pixel values at the coordinates (x,y).

In S1005, the image transformation unit 510 updates the positions of the control points. The update processing of the distortion correction will now be described with reference to FIG. 12. The update formula of the positions of the control points for distortion correction is expressed by the following Formula (12). $\mu$ represents the weight coefficient and may be a value such as 0.1 or may change according to the speed of the update of control points. $\nabla c$ is represented by the following Formula (13) and is a differential value of the sum of squares of the differences of the pixel values of the alignment image I' and the scanned image T in a group $D_{m,l}$ of positions of pixels at or near the control point $p_{m,l}$ of FIG. 12.

$$ p_{m,l} = p_{m,l} + \mu \frac{\nabla c}{\|\nabla c\|} \qquad \ldots \quad (12) $$

$$ \nabla c = \frac{\partial}{\partial p_{m,l}} \sum_{D_{m,l}} |I'(x,y) - T(x,y)|^2 \quad \ldots \quad (13) $$

Next, in S1006, the image transformation unit 510 performs update of the pixels. The update is executed on the basis of Formula (1).

Next, in S1007, the CPU 515 executes processing to determine whether or not pixel update is complete. For example, a distance d between the alignment image I" and the scanned image T is obtained, and whether or not pixel update is complete is determined on the basis of the distance d. The distance d is expressed by the following Formula (14).

$$ d = \frac{1}{XY} \sum_{x=1}^{X} \sum_{y=1}^{Y} |I'(x,y) - T(x,y)| \quad \ldots \quad (14) $$

In S1007, the alignment unit 511 determines that pixel update is complete in a case where the distance d is equal to or less than a preset threshold. On the other hand, the alignment unit 511 determines that pixel update is not complete in a case where the distance d is not equal to or less than the preset threshold. An example of another determination method includes a method in which an upper limit for the number of times update is performed is preset and update is determined to be complete when the upper limit is reached.

In S1007, in a case where it is determined that pixel update is not complete, the CPU 515 performs control to execute processing to return to S1005. In S1007, in a case where it is determined that pixel update is complete, the CPU 515 ends the distortion correction processing. Thus ends the distortion correction processing.

As described above, instances of printing with a possibility of an image abnormality can be reduced by executing the calibration of the inspection apparatus 102 according to a variation in the color and distortion that can be predicted when there is a sheet change via the inspection processing described above and the calibration unit 514.

Modification Example 1 of First Embodiment

Inspection processing according to modification example 1 of the first embodiment according to the present disclosure will be described below.

In the first embodiment described above, the calibration of the inspection apparatus 102 is executed according to color variation due to a sheet change. However, in some cases, the user may wish to determine whether or not to execute the calibration of the inspection apparatus 102. Thus, in modification example 1, the user selects whether or not to execute the calibration of the inspection apparatus 102.

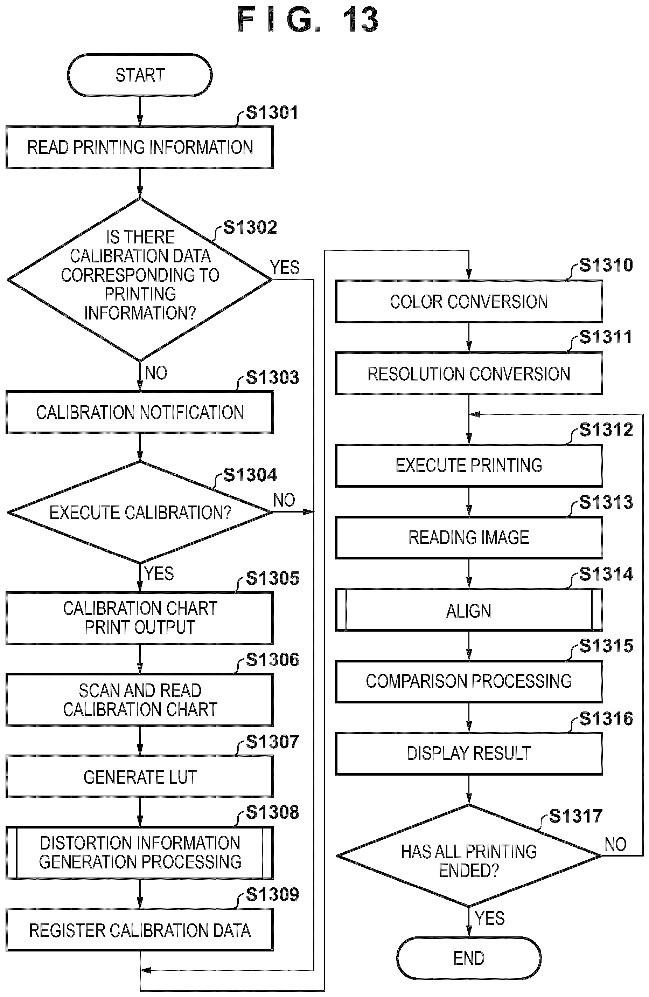

The inspection processing of modification example 1 will now be described with reference to FIG. 13. The processing described below is processing executed by the inspection processing unit 506. For example, the processing is implemented by the CPU 515 of the control unit 503 of the inspection apparatus 102 reading out a program stored in the storage unit 504 onto the memory 516 and executing the program. S1301, S1302, and S1305 to S1317 are similar to S601, S602, and S604 to S616 and thus will not be described.

In S1302, the CPU 515 displays a UI screen 703 illustrated in FIG. 7B for notifying the user that calibration of the inspection apparatus will be executed via the operation display unit 505. The UI screen 703 displays a message for allowing the user to select whether or not to execute calibration. For example, the operation display unit 505 displays a message saying "New sheet type. Will you execute calibration?". The UI screen 703 also includes a Yes button 704, a No button 705, and a Close button 706 for the user to make a selection.

In S1303, the CPU 515 determines whether or not calibration of the inspection apparatus 102 is to be executed via the operation display unit 505. When the user operates the Yes button 704, the CPU 515 advances the processing to S1305 and performs control to start the calibration of the inspection apparatus 102. On the other hand, when the user operates the No button 705 or the Close button 706, the CPU 515 determines that the calibration of the inspection apparatus 102 is not required and advances the processing to S1310.

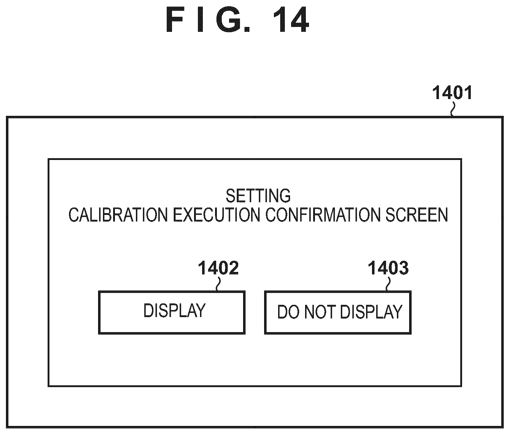

The first embodiment and modification example 1 of the first embodiment may be able to be switched depending on the user. A settings screen 1401 illustrated in FIG. 14 may be displayed on the operation display unit 505 for selection. On the settings screen 1401, when the user operates a button 1402, the first embodiment is executed. When the user operates a button 1403, modification example 1 of the first embodiment is executed, for example.

As described above, according to modification example 1, the user can determine whether or not to execute the calibration of the inspection apparatus 102. Also, the user can select whether calibration is forcibly executed or whether calibration can be selected to be executed or not.

Modification Example 2 of First Embodiment

Inspection processing according to modification example 2 of the first embodiment according to the present disclosure will be described below.

In the first embodiment described above, the calibration of the inspection apparatus 102 is executed according to color variation that can be predicted when there is a sheet change. In modification example 2, before the calibration of the inspection apparatus 102 is executed, the adjustment of the image forming apparatus 101 is performed.

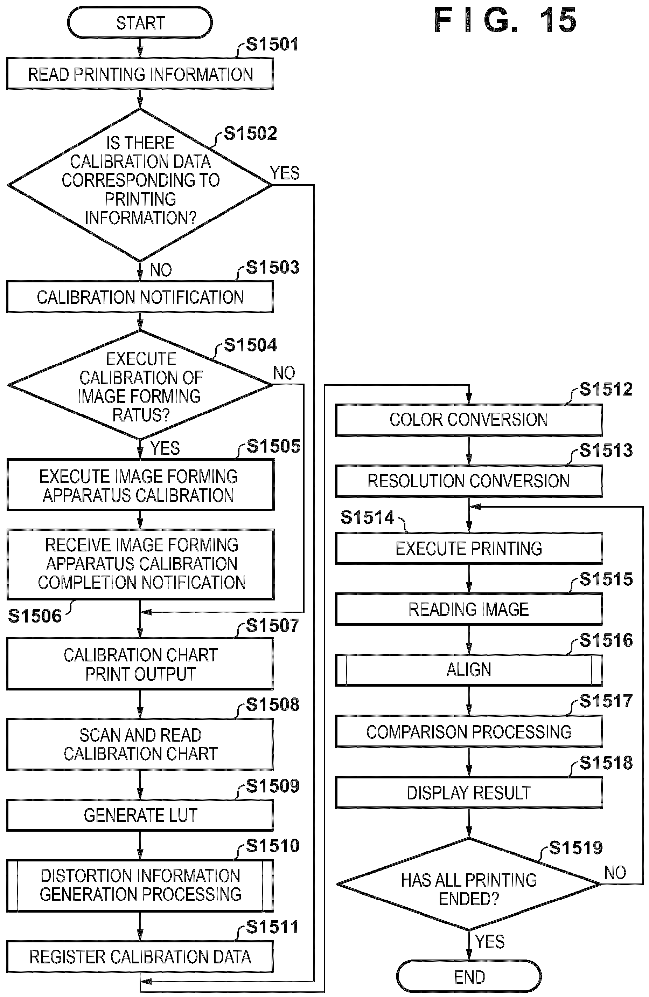

The flowchart of FIG. 15 illustrates a modification example of the flowchart illustrated in FIG. 6. The processing described below is processing executed by the inspection processing unit 506. For example, the processing is implemented by the CPU 515 of the control unit 503 of the inspection apparatus 102 reading out a program stored in the storage unit 504 onto the memory 516 and executing the program. S1501, S1502, and S1507 to S1519 are similar to S601, S602, and S604 to S616 and thus will not be described.

In S1503, the CPU 515 displays a UI screen 707 illustrated in FIG. 7C for prompting the user to execute the calibration of the image forming apparatus 101 via the operation display unit 505. The UI screen 707 displays a message for allowing the user to select whether or not to execute automatic tone correction of the image forming apparatus 101 before executing the calibration. For example, the operation display unit 505 displays a message saying "Execute automatic tone correction before executing calibration?". The UI screen 703 also includes a Yes button 708, a No button 709, and a Close button 710 for the user to make a selection.

The automatic tone correction is a function of the image forming apparatus 101 and includes automatically correcting the tone, density, and color of the printed image by outputting via printing a test page and scanning and reading the it on a document platen glass. Automatic tone correction may also be referred to as calibration of the image forming apparatus 101.

In S1504, the CPU 515 determines whether or not calibration of the image forming apparatus 101 is to be executed via the operation display unit 505. When the user operates the Yes button 708 (in the case of YES), the CPU 515 advances the processing to S1506 and causes the image forming apparatus 101 to start calibration. On the other hand, when the user operates the No button 709 or the Close button 710 (in the case of NO), the CPU 515 determines that the calibration of the image forming apparatus 101 is not required and advances the processing to S1507.

In S1505, the CPU 515 transmits a calibration command for the image forming apparatus 101 to the image processing unit 209 via the controller 201 provided in the image forming apparatus 101. When the image processing unit 209 of the image forming apparatus 101 receives this command, the calibration of the image forming apparatus 101 is executed.

In S1506, the CPU 515 receives a notification that the calibration of the image forming apparatus 101 is complete from the image processing unit 209 via the controller 201 provided in the image forming apparatus 101. When the CPU 515 receives the completion notification, the CPU 515 advances the processing to S1507 and performs control to start the calibration of the inspection apparatus 102.

As described above, according to modification example 2, the user can select whether to perform automatic tone correction (calibration) of the image forming apparatus 101 before the calibration of the inspection apparatus 102 is executed.

Second Embodiment

In the first embodiment, in a case where a variation in the color, distortion, or the like in conjunction with a change of sheets can be predicted, the calibration of the inspection apparatus 102 is executed. However, even with the same sheet, due to changes over time, the color and distortion of the printed material may change. In the second embodiment, the calibration of the inspection apparatus 102 is executed at the time of sheet change as well as at a constant interval.

In the second embodiment, the calibration of the inspection apparatus 102 is executed in response to a certain amount of time elapsing since the previously executed calibration of the inspection apparatus 102. In this manner, the calibration of the inspection apparatus 102 is executed due to the change over time in addition to variation in the color and distortion that can be predicted when there is a sheet change. This allows instances of printing with a possibility of an image abnormality to be reduced.

Only the differences from the first embodiment will be described below.

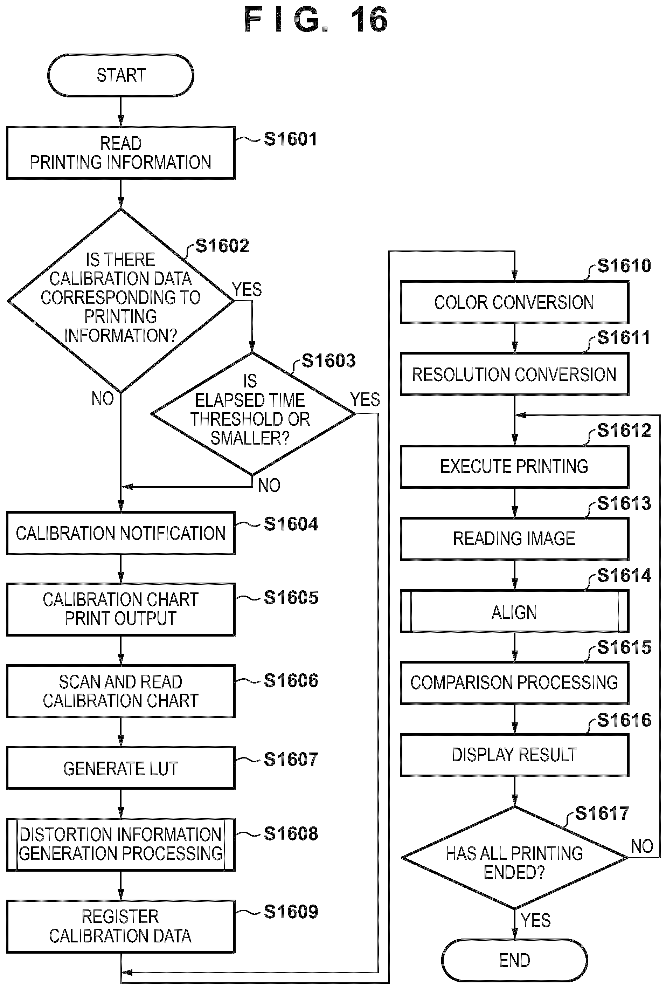

FIG. 16 is a flowchart for describing the inspection processing by the inspection apparatus 102 according to the second embodiment. The processing described below is processing executed by the inspection processing unit 506. For example, the processing is implemented by the CPU 515 of the control unit 503 of the inspection apparatus 102 reading out a program stored in the storage unit 504 onto the memory 516 and executing the program.

Other than S1603 and S1609, S1601, S1602, S1604 to S1608, and S1610 to S1617 are similar to S601, S602, S604 to S607, and S609 to S617 and thus will not be described.

First, in S1603, the CPU 515 checks the elapsed time from the previous calibration. The time of the execution of the most recent calibration is stored in the calibration data list. Whether or not a predetermined amount of time has elapsed is determined by comparing the calibration execution time and the current time. Table 4 indicates an example of the calibration data list according to the present embodiment.

Table 4. Calibration data list with calibration execution time associated

| ID | Sheet type | Execution time |
|----|-----------|----------------|
| 001 | Regular paper | 2024/05/20, 12:00 |
| 002 | Thin paper | 2024/05/21, 13:00 |
| 003 | Coated paper | 2024/05/21, 14:00 |

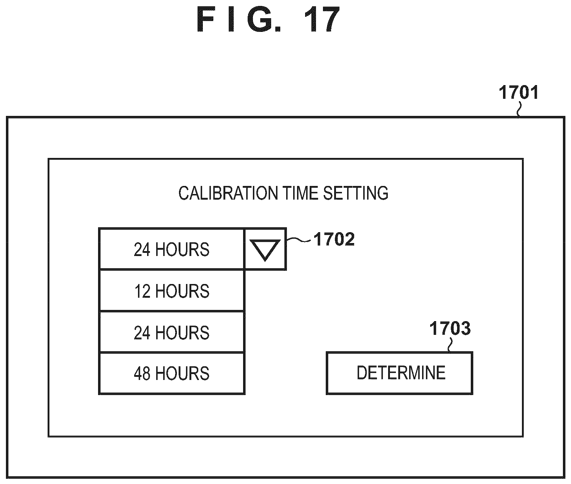

Take an example in which the current time is "Year 2024/Month 5/Day 21 15 hours 00 minutes". Also, the threshold for the elapsed time is set to 24 hours. In a case where regular paper is designated for the print job, by comparing the current time and the most recent execution time for regular paper, we can see that 27 hours has passed. Thus, the CPU 515 determines that the calibration of the inspection apparatus 102 is required and advances the processing to S1603. On the other hand, in a case where coated paper is designated for the print job, only one hour has passed. Thus, the CPU 515 determines that the calibration of the inspection apparatus 102 is not required and advances the processing to S1610. Note that the threshold for the elapsed time may be prestored in the storage unit 504. Also, the operation display unit 505 may display a UI screen 1701 such as that illustrated in FIG. 17 for setting the elapsed time threshold. When the user selects the threshold from a list 1702 on the UI screen 1701 and operates a button 1703, the selected threshold is stored in the storage unit 504. The threshold is not limited to being selected from the list 1702, and the user may input a predetermined amount of time as the threshold.

In S1609, the calibration unit 514 performs registration of the calibration data. In the second embodiment, the execution time is updated for the sheet type for which the calibration of the inspection apparatus 102 in the calibration data list is executed.

As described above, the amount of time elapsed since the calibration execution time of the inspection apparatus 102 is obtained, and the calibration of the inspection apparatus 102 is executed according to the change over time of the color and distortion. This allows instances of printing with a possibility of an image abnormality to be reduced.

Third Embodiment

In the first embodiment, in a case where a variation in the color, distortion, or the like in conjunction with a change of sheets can be predicted, the calibration of the inspection apparatus 102 is executed. However, even in the case of different sheet types, there may be sheet types with similar sheet characteristics for which the calibration of the inspection apparatus 102 is not required. For example, a single-sided coated paper is made of a coated paper side and a regular paper side. Thus, in the case of single-sided printing, by applying the calibration data of the coated paper to the printing side, the calibration of the inspection apparatus 102 becomes unnecessary.

In the third embodiment, for different sheet types, the calibration data of similar sheet characteristics can be used to make execution of the calibration unnecessary. Only the differences from the first embodiment will be described below.

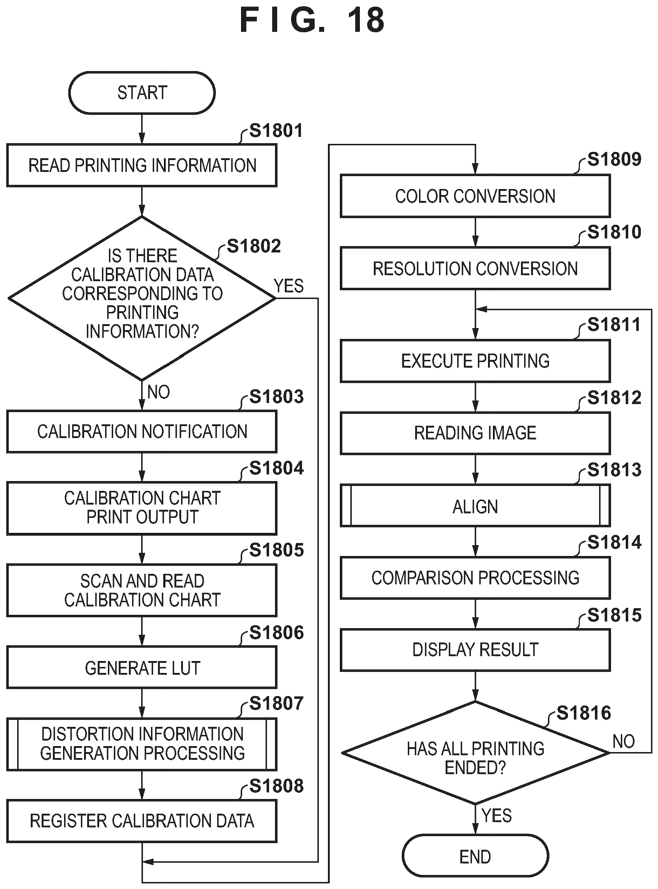

FIG. 18 is a flowchart for describing the inspection processing by the inspection apparatus 102 according to the third embodiment. The processing described below is processing executed by the inspection processing unit 506. For example, the processing is implemented by the CPU 515 of the control unit 503 of the inspection apparatus 102 reading out a program stored in the storage unit 504 onto the memory 516 and executing the program.

Other than S1801, S1802, S1804, S1805, and S1808, S1803, S1806, S1807, and S1809 to S1816 are similar to S603, S606, S607, and S609 to S616 and thus will not be described.

First, in S1801, the CPU 515 receives the RIP data of the print job and the sheet information from the image processing unit 209 via the controller 201 provided in the image forming apparatus 101. Here, the sheet information according to the present embodiment is sheet characteristics such as the grammage and whiteness of the sheet and the sheet size. Also, in a case where the sheet characteristics are different for the front print surface and the back surface of the sheet, the sheet information of the front surface and the back surface are obtained by the CPU 515.

Next, in S1802, the CPU 515 determines whether or not there is calibration data that matches the sheet information of the print job. Table 5 indicates an example of the calibration data list used in the present embodiment. In a case where the front surface and the back surface have different sheet characteristics, the CPU 515 determines whether or not there is matching calibration data for each surface. Then, in a case where there is matching calibration data for both surfaces, the CPU 515 advances the processing to S1809.

Table 5. Calibration data list

| ID | Grammage (g/m$^2$) | Whiteness | Sheet size |
|---|---|---|---|
| 001 | 81 | Medium | A4 |
| 002 | 64 | Low | A3 |
| 003 | 180 | Medium | A3 |

The determination of whether the sheet information matches the calibration data in S1802 may use a tolerance value. For example, in a case where the grammage of the sheet information matches the grammage of the calibration data within a range such as "70 g/m$^2$ or less", "71 to 110 g/m$^2$", and "111 g/m$^2$ or greater", it may be determined that there is a match. Note that for the sheet information, a match is not required for all of the items. It is sufficient that the conditions required for the calibration of the inspection apparatus 102 can be extracted, and the CPU 515 may perform a determination only for grammage, for example.

Next, in S1804 and S1805, the CPU 515 executes processing similar to the processing of S604 and S605. Here, in S1802, in a case where it is determined that there is no calibration data for only one surface, the print output of a calibration chart and scanning and reading are performed only for the surface determined to have no calibration data.

In S1808, the CPU 515 performs registration of the calibration data. Table 6 indicates an example in which an item with grammage "200 g/m$^2$", whiteness "high", and sheet size "A3" is registered in the calibration data list of Table 5.

Table 6. Calibration data list

| ID | Grammage (g/m$^2$) | Whiteness | Sheet size |
|---|---|---|---|
| 001 | 81 | Medium | A4 |
| 002 | 64 | Low | A3 |
| 003 | 180 | Medium | A3 |

(continued)

| ID | Grammage (g/m²) | Whiteness | Sheet size |
|-----|-----|-----|-----|
| 004 | 200 | High | A3 |

An example in which the calibration of the inspection apparatus 102 is abbreviated via the configuration described above will now be described. For example, the front surface has grammage "200 g/m²", whiteness "high", and sheet size "A3". The back surface has grammage "200 g/m²", whiteness "medium", and sheet size "A3". First, the front surface of the sheet information matches ID004 of the calibration data list. Next, the back surface of the sheet information has grammage of equal to or greater than 111 g/m², but other than grammage, matches ID003 in terms of sheet characteristics. Thus, the calibration data associated with ID004 is applied to the front surface, and the calibration data associated with ID003 is applied to the back surface. In this manner, previously registered calibration data of the inspection apparatus 102 are combined and separate calibration data are applied to the front surface and the back surface to allow the calibration of the inspection apparatus 102 to be abbreviated.

Fourth Embodiment

According to a modification example of the first embodiment, whether or not to execute the calibration of the inspection apparatus is determined on the basis of information of the print job at the time of printing. According to the fourth embodiment, in a case where the status of the image forming apparatus 101 changes, the calibration of the inspection apparatus 102 is performed.

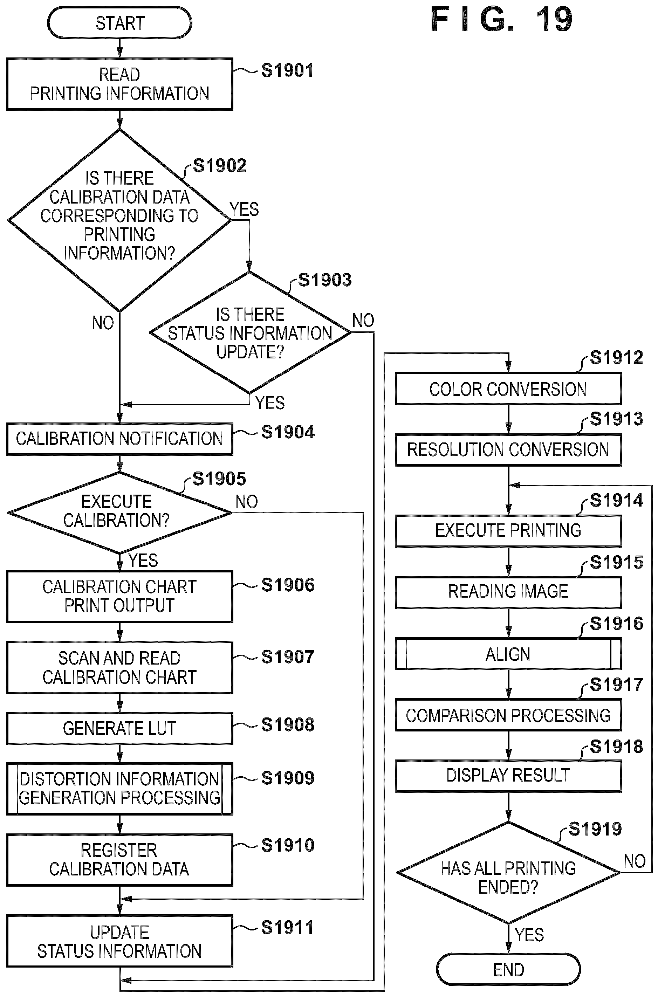

FIG. 19 is a flowchart for describing the inspection processing by the inspection apparatus 102 according to the fourth embodiment. The processing described below is processing executed by the inspection processing unit 506. For example, the processing is implemented by the CPU 515 of the control unit 503 of the inspection apparatus 102 reading out a program stored in the storage unit 504 onto the memory 516 and executing the program. Only the differences from the control flow of FIG. 13 according to modification example 1 of the first embodiment will be described below. S1904 to S1910 and S1912 to S1919 are similar to S603 to S608 and S609 to S616 and thus will not be described.

First, in S1901, the CPU 515 receives the RIP data of the print job, the sheet information, and status information of the image forming apparatus 101 from the image processing unit 209 via the controller 201 provided in the image forming apparatus 101. The status information includes, for the image forming apparatus 101, information such as adjustment execution and part replacement information, with the time thereof associated together. Table 7 indicates an example of the status information of the image forming apparatus 101.

Table 7. Status information of image forming apparatus

| Status information | Update time |
|-----|-----|
| Tone correction execution information | 2024/05/20, 12:00 |
| Registration correction execution information | 2024/05/20, 12:30 |
| Body part replacement information | 2024/04/20, 12:00 |
| Jam information | 2024/02/20, 12:00 |
| Image processing service mode change information | 2024/02/20, 12:00 |

In S1903, the CPU 515 determines whether or not there is a status information update for the ID referenced in S1902. Here, each ID information of the calibration data list indicated in Table 2 has the status information of the image forming apparatus 101 associated with it. Table 8 indicates an example of the status information of ID001 in a case where ID001 is referenced in S1902.

Table 8. Status information of ID001

| Status information | Update time |
|-----|-----|
| Tone correction execution information | 2024/05/19, 12:00 |
| Registration correction execution information | 2024/05/20, 12:30 |
| Body part replacement information | 2024/04/20, 12:00 |
| Jam information | 2024/02/20, 12:00 |

(continued)

| Status information | Update time |
|---|---|
| Image processing service mode change information | 2024/02/20, 12:00 |

In S1903, in a case where the update time of the status information obtained from the image forming apparatus 101 is newer than the update time of the status information of ID001 (in the case of YES), the CPU 515 determines that the calibration of the inspection apparatus 102 is required. Then the processing proceeds to S1903. In the examples in Table 7 and Table 8, the "tone correction execution information" is a newer time. Since tone correction of the image forming apparatus 101 has executed after the calibration data of ID001 is obtained, it is determined that the calibration of the inspection apparatus 102 is required.

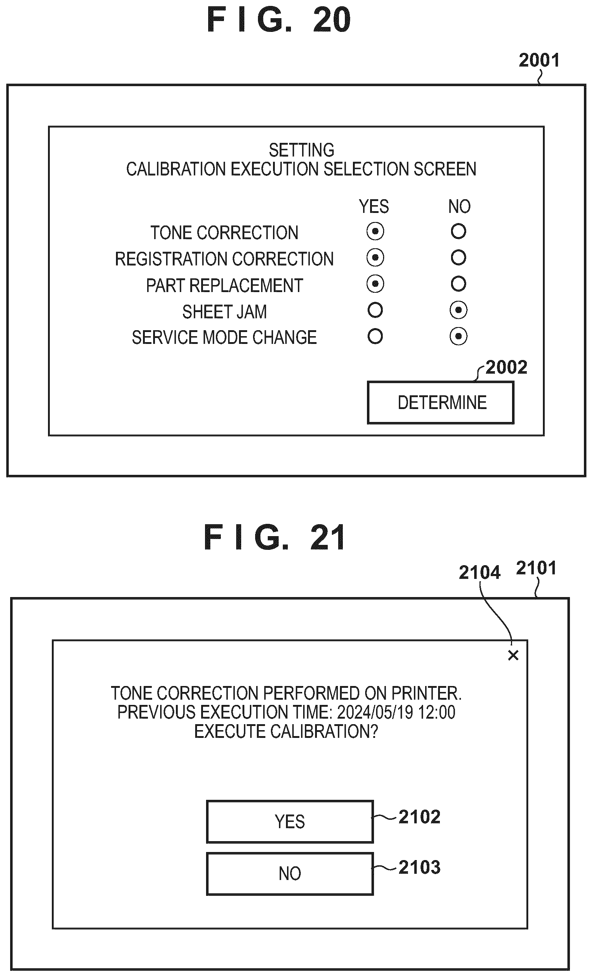

In the example described above, whether there is an update is determined for all status information, but no such limitation is intended. The user may be able to select to update the status information used for determining execution of the calibration. For example, a settings screen 2001 illustrated in FIG. 20 may be displayed, and the user may select the status information of the image forming apparatus 101 to use in determining calibration execution. In the settings screen 2001, selectable radio buttons "Yes" and "No" are provided as tone correction, registration correction, part replacement, sheet jam, and service mode change, as the status information. When the user operates an OK button 2002, the settings information with the radio button settings is stored in the storage unit 504. In S1903, the CPU 515 may determine whether only the status information used for determining calibration execution selected as "Yes" have been updated.

In S1904, the CPU 515 notifies the user that the calibration of the inspection apparatus 102 is to be executed via the operation display unit 505. In S1904, the operation display unit 505 displays a UI screen 2101 illustrated in FIG. 21. The UI screen 2101 is similar to the UI screen 701, but the message notified to the user is different. In the example of the UI screen 2101, the updated status information and the update time are displayed and a message for allowing the user to select whether or not to execute calibration is displayed.

In S1911, the CPU 515 updates the status information. In a case where it is determined that there is an update to the status information of the image forming apparatus 101 in S1903, the CPU 515 executes processing to update the status information of the corresponding ID to the content of the status information received in S1901.

In the third embodiment, the calibration data is stored in the storage unit 504 associated with the printing information such as sheet type, and calibration execution is determined according to the elapsed time from the calibration. However, no such limitation is intended, and calibration execution may be determined according to only the elapsed time from the calibration, without considering the printing information.

As described above, instances of printing with a possibility of an image abnormality can be reduced by executing the calibration of the inspection apparatus 102 according to a variation in the color and distortion caused by a change in the status of the image forming apparatus 101.

Modification Example of Fourth Embodiment

Next, inspection processing according to a modification example of the fourth embodiment will be described.

In the fourth embodiment described above, the calibration of the inspection apparatus 102 is executed according to a change in the color and distortion caused by a change in the status of the image forming apparatus 101. In the modification example, calibration is executed according to the status of the inspection apparatus 102 in addition to the status of the image forming apparatus 101. In a case where there is a variation in the sensor or light source of the imaging unit 403, there may be a variation in the color and distortion. Also, when inspection is repeatedly executed, parts may be replaced, sensors may be cleaned, and the like, and the status of the sensor and the light source may change.

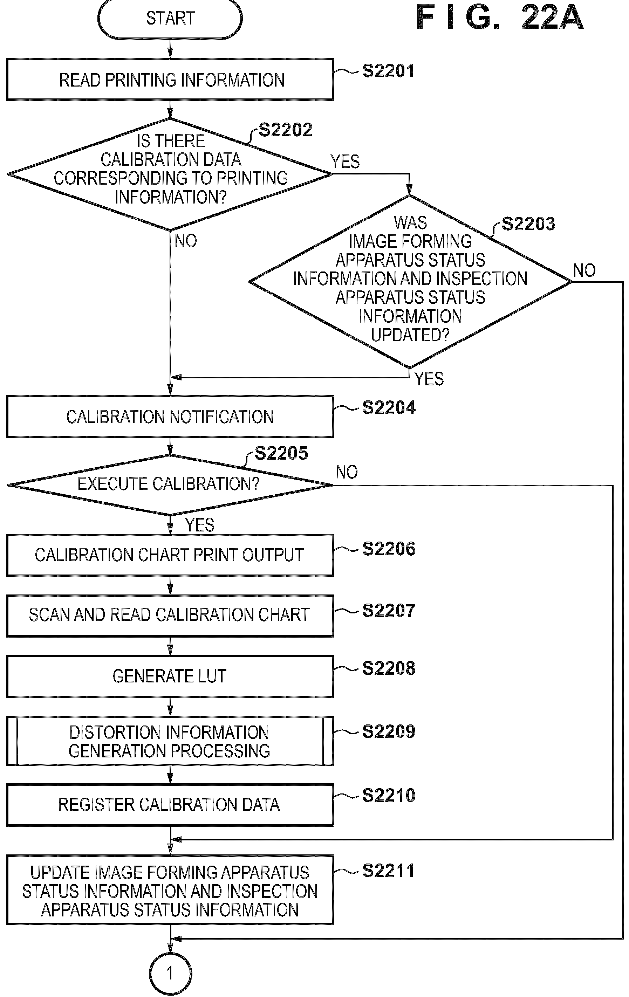

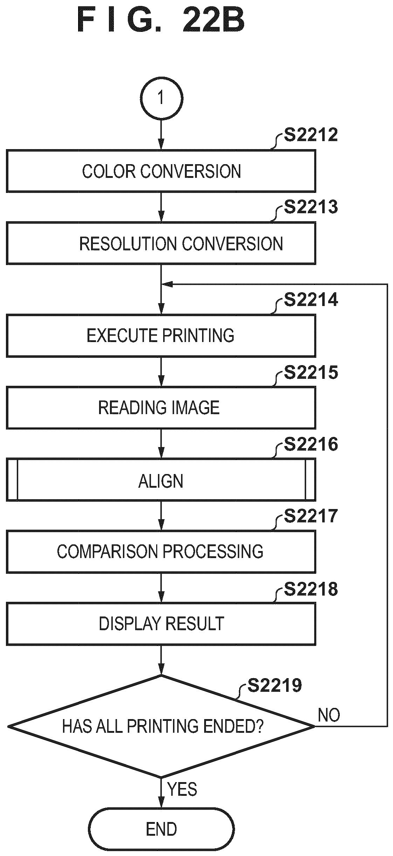

FIGS. 22A and 22B together illustrate a single, modified flowchart based on the flowchart shown in FIG. 19.

Steps S2201, S2202, S2204 to S2210, and S2212 to S2219 are similar to steps S1901, S1902, S1904 to S1910, and S1912 to S1919, and thus description thereof is omitted.

In S2203, the CPU 515 executes processing to read the status information of the inspection apparatus 102 from the storage unit 504. The status information of the inspection apparatus 102 is information in which items such as part replacement and cleaning of the inspection apparatus 102 and the execution time thereof are associated together. In S2203, the CPU 515 uses the status information of the inspection apparatus 102 together with the status information of the image forming apparatus 101. The CPU 515 compares the status information of the image forming apparatus 101 and the status information of the inspection apparatus stored for each ID with the status information obtained from the image forming apparatus 101 and the inspection apparatus 102, and if there is a change in the status information, the CPU 515 determines that the calibration of the inspection apparatus 102 is required.

In S2211, the status information of the image forming apparatus 101 together with the status information of the inspection apparatus are recorded in association with the ID of the calibration data and updated.

Also, in the modification example, the settings screen 2001 illustrated in FIG. 20 may be displayed, and the user may select the status information of the inspection apparatus 102 to use in determining calibration execution. On the settings screen 2001, status information of the inspection apparatus 102 such as part replacement and cleaning may be added as items together with the status information of the image forming apparatus 101.

Also, in the fourth embodiment, the calibration data is stored in the storage unit 504 associated with the printing information such as the sheet type. However, calibration execution may be determined according to only a change in the status information, without considering the printing information.

As described above, instances of printing with a possibility of an image abnormality can be reduced by executing the calibration of the inspection apparatus 102 according to a variation in the color and distortion caused by a variation in the inspection apparatus 102.

Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present disclosure has been described with reference to exemplary embodiments, it is to be understood that the present disclosure is not limited to the disclosed exemplary embodiments. The scope of the following claims is to be accorded the broadest interpretation so as to encompass all such modifications and equivalent structures and functions.

Various embodiments have been described in detail above but it will be understood that the present disclosure is not limited to these embodiments and encompasses all modifications, variants, alternatives and equivalents falling within the scope of the appended claims.

**Claims**

1. An image inspection apparatus (102) comprising:

   image inspection means (506) that scans, via scanning means (403), a sheet on which an image is formed conveyed from image forming means (202) and detecting an abnormality in a formed image via comparison with a reference image;
   storage means (504) for storing calibration data;
   determining means (515) for determining whether or not to execute calibration to adjust the reference image or the formed image used by the inspection means,
   calibration execution means (514) for executing calibration and storing the calibration data in the storage means, in a case where it is determined to execute calibration;
   readout means (514) for reading out the calibration data from the storage means, in a case where it is determined not to execute calibration; and
   adjustment means (511) for adjusting the reference image or the formed image based on the calibration data stored in the storage means or the calibration data obtained by execution of the calibration.

2. The image inspection apparatus (102) according to claim 1, wherein

   the storage means (504) stores the calibration data in association with sheet information, and
   the determining means (515) determines to execute calibration in a case where calibration data corresponding to sheet information of a print job is not stored in the storage means (504).

3. The image inspection apparatus (102) according to claim 1 or 2, wherein

the storage means (505) stores the calibration data in association with execution time of calibration, and
the determining means (515) determines to execute calibration in a case where a predetermined amount of time has elapsed since an execution time of a most recent calibration.

4. The image inspection apparatus (102) according to any one of claims 1 to 3, wherein

the storage means (505) stores the calibration data in association with status information of the image forming means (202), and
the determining means (515) determines to execute calibration in a case where there has been an update to the status information of the image forming means (202).

5. The image inspection apparatus (102) according to any one of claims 1 to 4, wherein the storage means (505) stores the calibration data in association with status information of the inspection apparatus, and
the determining means (515) determines to execute calibration in a case where there has been an update to status information of the inspection apparatus (102).

6. The image inspection apparatus (102) according to any one of claims 2 to 5, wherein the sheet information is a sheet type.

7. The image inspection apparatus (102) according to any one of claims 2 to 6, wherein the sheet information is sheet characteristics.

8. The image inspection apparatus (102) according to any one of claims 1 to 7, comprises the first display means (515) for displaying a notification screen (701) for notifying a user that the calibration is to be executed, in a case where the determining means (515) determines to execute calibration.

9. The image inspection apparatus (102) according to claim 8, wherein
the notification screen is a screen for allowing a user to select whether or not to execute the calibration.

10. The image inspection apparatus (102) according to any one of claims 4 to 9, comprises the second display means (515) for displaying a UI screen (703) on which a user can select status information of the image forming means (202), and
the determining means (515) determines to execute calibration in a case where there has been an update to status information selected on the UI screen (703).

11. The image inspection apparatus according to any one of claims 3 to 10, comprises the third display means (515) displays a UI screen (1701) on which the predetermined amount of time can be selected.

12. An image forming apparatus (102) comprising:

an image forming means (202) for forming an image on a sheet;
scanning means (403) for scanning the sheet on which an image is formed; and
the inspection apparatus (101) according to any one of claims 1 to 11.

13. An image inspection method for an inspection apparatus (101) provided with storage means (504) for storing calibration data and an image inspection means (506) for scanning, via scanning means (403), a sheet on which an image is formed conveyed from image forming means (202) and detects an abnormality in a formed image via comparison with a reference image,
the method comprising:

determining whether or not to execute calibration to adjust the reference image of the formed image used by the image inspection means (506) (S602);
in a case where it is determined to execute calibration, executing calibration and storing calibration data in the storage means (504) (S608);

in a case where it is determined not to execute calibration, reading out calibration data from the storage means (504) (S602); and

based on calibration data stored in the storage means (504) (S602) or calibration data obtained by execution of the calibration (S608), performing adjustment of the reference image or the formed image (S609).

# F I G. 1

# F I G. 2

# F I G. 3

# FIG. 4A

# FIG. 4B

# F I G. 5

# F I G. 6

```
                    ┌─────────────┐
                    │    START    │
                    └─────────────┘
                           │
                           ▼                              S601
            ┌──────────────────────────────┐
            │   READ PRINTING INFORMATION  │
            └──────────────────────────────┘
                           │
                           ▼                              S602
                     ╱──────────╲
                    ╱  IS THERE   ╲
                   ╱  CALIBRATION  ╲       YES
                  ╱ DATA CORRES-    ╲──────────┐
                  ╲ PONDING TO      ╱          │
                   ╲ PRINTING      ╱           │
                    ╲INFORMATION? ╱            │
                     ╲──────────╱              │
                          │ NO                 │
                          ▼           S603     │
            ┌──────────────────────────────┐  │
            │   CALIBRATION NOTIFICATION   │  │
            └──────────────────────────────┘  │
                          │          S604      │
                          ▼                    │
            ┌──────────────────────────────┐  │
            │      CALIBRATION CHART       │  │
            │        PRINT OUTPUT          │  │
            └──────────────────────────────┘  │
                          │          S605      │
                          ▼                    │
            ┌──────────────────────────────┐  │
            │        SCAN AND READ         │  │
            │      CALIBRATION CHART       │  │
            └──────────────────────────────┘  │
                          │          S606      │
                          ▼                    │
            ┌──────────────────────────────┐  │
            │        GENERATE LUT          │  │
            └──────────────────────────────┘  │
                          │          S607      │
                          ▼                    │
            ┌──────────────────────────────┐  │
            │   DISTORTION INFORMATION     │  │
            │   GENERATION PROCESSING      │  │
            └──────────────────────────────┘  │
                          │          S608      │
                          ▼                    │
            ┌──────────────────────────────┐  │
            │  REGISTER CALIBRATION DATA   │  │
            └──────────────────────────────┘  │
                          │                    │
                          ▼                    │
```

S609 — COLOR CONVERSION

S610 — RESOLUTION CONVERSION

S611 — EXECUTE PRINTING

S612 — READING IMAGE

S613 — ALIGN

S614 — COMPARISON PROCESSING

S615 — DISPLAY RESULT

S616 — HAS ALL PRINTING ENDED?
  NO
  YES — END

**F I G. 7A**

701

NEW SHEET TYPE.
CALIBRATION WILL BE EXECUTED.

CONFIRM ~702

**F I G. 7B**

706 703

NEW SHEET TYPE.
EXECUTE CALIBRATION?

YES ~704

NO ~705

**F I G. 7C**

710 707

EXECUTE AUTOMATIC TONE
CORRECTION OF PRINTING APPARATUS
PRIOR TO CALIBRATION EXECUTION

YES ~708

NO ~709

F I G. 8A

F I G. 8B

# FIG. 9

```
┌────────────────────────────────┐
│  DISTORTION INFORMATION        │
│  GENERATION PROCESSING         │
└────────────────────────────────┘
              │
              ▼
┌────────────────────────────────────────┐
│  READ CHART REFERENCE IMAGE            │──── S901
└────────────────────────────────────────┘
              │
              ▼
┌────────────────────────────────────────┐
│  DETECT MARK POSITION FROM REFERENCE IMAGE │──── S902
└────────────────────────────────────────┘
              │
              ▼
┌────────────────────────────────────────┐
│  ALIGNMENT BY AFFINE TRANSFORMATION    │──── S903
└────────────────────────────────────────┘
              │
              ▼
┌────────────────────────────────────────┐
│  OBTAIN MARK INFORMATION FROM SCANNED IMAGE │──── S904
│  AND GENERATE DISTORTION INFORMATION   │
└────────────────────────────────────────┘
              │
              ▼
        ┌──────────┐
        │   END    │
        └──────────┘
```

# FIG. 10

```
┌────────────────────────────────┐
│  ALIGNMENT PROCESSING          │
└────────────────────────────────┘
              │
              ▼
┌────────────────────────────────────────┐
│  PRE-ALIGNMENT                         │──── S1001
└────────────────────────────────────────┘
              │
              ▼
┌────────────────────────────────────────┐
│  OBTAIN DISTORTION INFORMATION         │──── S1002
└────────────────────────────────────────┘
              │
              ▼
┌────────────────────────────────────────┐
│  OBTAIN CONTROL POINT COORDINATES      │──── S1003
│  BASED ON DISTORTION INFORMATION       │
└────────────────────────────────────────┘
              │
              ▼
┌────────────────────────────────────────┐
│  GENERATE INITIAL DISTORTION IMAGE     │──── S1004
└────────────────────────────────────────┘
              │
              ▼
┌────────────────────────────────────────┐
│  UPDATE CONTROL POINTS                 │──── S1005
└────────────────────────────────────────┘
              │
              ▼
┌────────────────────────────────────────┐
│  UPDATE PIXELS                         │──── S1006
└────────────────────────────────────────┘
              │
              ▼
   NO  ◇ IS UPDATE COMPLETED? ◇──── S1007
              │ YES
              ▼
        ┌──────────┐
        │   END    │
        └──────────┘
```

# FIG. 11

1101

$P_{m,l}$

1102

# FIG. 12

$P_{m,l}$

$D_{m,l}$

# FIG. 13

START

S1301
READ PRINTING INFORMATION

S1302
IS THERE CALIBRATION DATA CORRESPONDING TO PRINTING INFORMATION?  —YES→

NO

S1303
CALIBRATION NOTIFICATION

S1304
EXECUTE CALIBRATION?  —NO→

YES

S1305
CALIBRATION CHART PRINT OUTPUT

S1306
SCAN AND READ CALIBRATION CHART

S1307
GENERATE LUT

S1308
DISTORTION INFORMATION GENERATION PROCESSING

S1309
REGISTER CALIBRATION DATA

S1310
COLOR CONVERSION

S1311
RESOLUTION CONVERSION

S1312
EXECUTE PRINTING

S1313
READING IMAGE

S1314
ALIGN

S1315
COMPARISON PROCESSING

S1316
DISPLAY RESULT

S1317
HAS ALL PRINTING ENDED?  —NO→

YES

END

# FIG. 14

1401

SETTING
CALIBRATION EXECUTION CONFIRMATION SCREEN

1402                          1403

| DISPLAY | DO NOT DISPLAY |

**F I G. 15**

START

S1501
READ PRINTING INFORMATION

S1502
IS THERE CALIBRATION DATA CORRESPONDING TO PRINTING INFORMATION? — YES

NO

S1503
CALIBRATION NOTIFICATION

S1504
EXECUTE CALIBRATION OF IMAGE FORMING RATUS? — NO

YES S1505
EXECUTE IMAGE FORMING APPARATUS CALIBRATION

RECEIVE IMAGE FORMING APPARATUS CALIBRATION COMPLETION NOTIFICATION

S1506

S1507
CALIBRATION CHART PRINT OUTPUT

S1508
SCAN AND READ CALIBRATION CHART

S1509
GENERATE LUT

S1510
DISTORTION INFORMATION GENERATION PROCESSING

S1511
REGISTER CALIBRATION DATA

S1512
COLOR CONVERSION

S1513
RESOLUTION CONVERSION

S1514
EXECUTE PRINTING

S1515
READING IMAGE

S1516
ALIGN

S1517
COMPARISON PROCESSING

S1518
DISPLAY RESULT

S1519
HAS ALL PRINTING ENDED? — NO

YES

END

# F I G. 16

START

READ
PRINTING INFORMATION — S1601

IS THERE
CALIBRATION DATA
CORRESPONDING TO
PRINTING
INFORMATION? — S1602

YES

NO

IS
ELAPSED TIME
THRESHOLD OR
SMALLER? — S1603

YES

NO

CALIBRATION NOTIFICATION — S1604

CALIBRATION CHART
PRINT OUTPUT — S1605

SCAN AND READ
CALIBRATION CHART — S1606

GENERATE LUT — S1607

DISTORTION INFORMATION
GENERATION PROCESSING — S1608

REGISTER
CALIBRATION DATA — S1609

COLOR CONVERSION — S1610

RESOLUTION CONVERSION — S1611

EXECUTE PRINTING — S1612

READING IMAGE — S1613

ALIGN — S1614

COMPARISON PROCESSING — S1615

DISPLAY RESULT — S1616

HAS ALL PRINTING
ENDED? — S1617

NO

YES

END

# F I G. 17

1701

CALIBRATION TIME SETTING

| 24 HOURS ▽ | 1702 |

| 12 HOURS |

| 24 HOURS |

| 48 HOURS |

1703

DETERMINE

# F I G. 18

START

↓ S1801

READ PRINTING INFORMATION

↓

S1802 — IS THERE CALIBRATION DATA CORRESPONDING TO PRINTING INFORMATION? — YES →

NO ↓ S1803

CALIBRATION NOTIFICATION

↓ S1804

CALIBRATION CHART PRINT OUTPUT

↓ S1805

SCAN AND READ CALIBRATION CHART

↓ S1806

GENERATE LUT

↓ S1807

DISTORTION INFORMATION GENERATION PROCESSING

↓ S1808

REGISTER CALIBRATION DATA

S1809

COLOR CONVERSION

↓ S1810

RESOLUTION CONVERSION

↓ S1811

EXECUTE PRINTING

↓ S1812

READING IMAGE

↓ S1813

ALIGN

↓ S1814

COMPARISON PROCESSING

↓ S1815

DISPLAY RESULT

↓ S1816

HAS ALL PRINTING ENDED? — NO

YES ↓

END

# FIG. 19

START

READ PRINTING INFORMATION — S1901

IS THERE CALIBRATION DATA CORRESPONDING TO PRINTING INFORMATION? — S1902

NO

YES

IS THERE STATUS INFORMATION UPDATE? — S1903

NO

YES

CALIBRATION NOTIFICATION — S1904

EXECUTE CALIBRATION? — S1905

NO

YES

CALIBRATION CHART PRINT OUTPUT — S1906

SCAN AND READ CALIBRATION CHART — S1907

GENERATE LUT — S1908

DISTORTION INFORMATION GENERATION PROCESSING — S1909

REGISTER CALIBRATION DATA — S1910

UPDATE STATUS INFORMATION — S1911

COLOR CONVERSION — S1912

RESOLUTION CONVERSION — S1913

EXECUTE PRINTING — S1914

READING IMAGE — S1915

ALIGN — S1916

COMPARISON PROCESSING — S1917

DISPLAY RESULT — S1918

HAS ALL PRINTING ENDED? — S1919

NO

YES

END

36

# F I G. 20

2001

SETTING
CALIBRATION EXECUTION SELECTION SCREEN

|  | YES | NO |
|---|---|---|
| TONE CORRECTION | ⊙ | ○ |
| REGISTRATION CORRECTION | ⊙ | ○ |
| PART REPLACEMENT | ⊙ | ○ |
| SHEET JAM | ○ | ⊙ |
| SERVICE MODE CHANGE | ○ | ⊙ |

2002

DETERMINE

# F I G. 21

2104  2101

✕

TONE CORRECTION PERFORMED ON PRINTER.
PREVIOUS EXECUTION TIME: 2024/05/19 12:00
EXECUTE CALIBRATION?

| YES | ~2102 |
|---|---|
| NO | ~2103 |

# F I G. 22A

START

READ PRINTING INFORMATION — S2201

IS THERE CALIBRATION DATA CORRESPONDING TO PRINTING INFORMATION? — S2202

YES

WAS IMAGE FORMING APPARATUS STATUS INFORMATION AND INSPECTION APPARATUS STATUS INFORMATION UPDATED? — S2203

NO

NO

YES

CALIBRATION NOTIFICATION — S2204

EXECUTE CALIBRATION? — S2205

NO

YES

CALIBRATION CHART PRINT OUTPUT — S2206

SCAN AND READ CALIBRATION CHART — S2207

GENERATE LUT — S2208

DISTORTION INFORMATION GENERATION PROCESSING — S2209

REGISTER CALIBRATION DATA — S2210

UPDATE IMAGE FORMING APPARATUS STATUS INFORMATION AND INSPECTION APPARATUS STATUS INFORMATION — S2211

1

# F I G. 22B

Europäisches
Patentamt
European
Patent Office
Office européen
des brevets

# EUROPEAN SEARCH REPORT

**Application Number**

EP 25 19 7273

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/106966 A1 (TAKESUE NAOYA [JP] ET AL) 28 March 2024 (2024-03-28) * paragraph [0045] - paragraph [0101]; claim 1; figures 3, 6 * | 1-13 | INV. H04N1/00 H04N1/60 |
| | ----- | | |
| A | US 2010/302597 A1 (SUGIYAMA TAKASHI [JP]) 2 December 2010 (2010-12-02) * paragraph [0029] - paragraph [0045]; figures 1-3 * | 1-13 | |
| | ----- | | |
| A | US 11 838 454 B2 (CANON KK [JP]) 5 December 2023 (2023-12-05) * column 5 - column 14; figures 5, 6, 7, 10,14 * | 1-13 | |
| | ----- | | |

**TECHNICAL FIELDS SEARCHED (IPC)**

H04N

The present search report has been drawn up for all claims

| Place of search | Date of completion of the search | Examiner |
|---|---|---|
| The Hague | 13 January 2026 | De Meyer, Doris Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 7273

This annex lists the patent family members relating to the patent documents cited in  the above-mentioned European search report.
The members are as contained in the European Patent Office EDP file on
The European Patent Office is in no way liable for these particulars which are merely given for the purpose of information.

13-01-2026

| Patent document cited in search report | Publication date | Patent family member(s) | | Publication date |
|---|---|---|---|---|
| US 2024106966 A1 | 28-03-2024 | NONE | | |
| US 2010302597 A1 | 02-12-2010 | JP | 4835725 B2 | 14-12-2011 |
| | | JP | 2010274569 A | 09-12-2010 |
| | | US | 2010302597 A1 | 02-12-2010 |
| US 11838454 B2 | 05-12-2023 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017187585 A